# EUROPEAN PATENT APPLICATION

(11) **EP 2 779 066 A1**
(43) Date of publication of application: **17.09.2014**
(21) Application number: 13001291.7
(22) Date of filing: 14.03.2013
(51) Int. Cl.: G06Q 20/22

(54) **Closed-loop mobile money transaction system**

(71) Applicant: Payfriendz Ltd., London WC2B 5AH (GB)
(72) Inventor: Rührig, Andreas, 10405 Berlin (DE)
(74) Representative: Grünecker, Kinkeldey, Stockmair & Schwanhäusser

(57) **Abstract**

The present disclosure relates to methods, techniques, and systems for settling trusted money request and / or transfer transactions between individuals, and also between individuals and business partners based on social network connections between these entities as represented in social graphs of virtual social networks o establish the transaction connection between the two transaction partners and directly settle the financial transaction between these partners using e.g. a mobile device application without the necessity of a further entity, like e.g. a bank, credit card company and the like, for clearing the transaction initiated on the mobile device.

The transactions are conducted based on a transaction system that may be accessed using a transaction application operating on a mobile computing device. The transaction system established and maintains a direct social graph connection between the entities of a money transaction by directly connecting the entities based on imported connections from one or more virtual social networks.

Based on the registered direct connection between a first entity and a target entity, the first entity may initiate a money request or transfer transaction directed to a target entity by operating transaction application on a mobile computing device that communicates with the transaction system to generate notifications documenting progress and confirmation of initiated transactions and providing settlement and clearing of confirmed transactions without involvement of a further financial service provider being external to the system.

## Description

### Technical Field

The present disclosure relates to methods, techniques, and systems for settling trusted money transactions between individuals, and between individuals and business partners using social network connections as represented in social graphs of virtual social networks to establish the transaction connection between two transaction partners.

### Background

Individual financial transactions, i.e. the transfer of money from one individual to another, are a key fundamental of today's economy. In general, these transactions are enabled by financial institutes, e.g. banks, financial service providers and/or credit card companies.

A prerequisite for any transaction in that sense is that the individual intending such a transaction has registered to an institution representing some financial service provider and has established an identity there. That identity allows the individual to create financial transactions to yet another individual and/or business partner. Such an identity may be for example a bank account, a credit card or the like.

In order to create a financial transaction, the individual generally has to disclose at least a part of that identity to a third party that the transaction is intended to be directed to. In the case of a bank transfer, the receiving end has disclosed its bank identity (for example, bank account number and the like) to the individual that intends to transfer money to the receiving individual. In other examples, e.g. when conducting transactions based on a credit card the individual owning the credit card and intending to transfer money has to disclose its credit card credential to the receiving transaction partner, in order to enable the receiving partner to create a credit card payment or booking credited to the individual's credit card account.

Conducting financial transactions on that basis is more and more perceived as cumbersome and ineffective. This is in particular applies for a transaction type that is most common and most frequently used: The transfer of small sums of money between numerous transfer partners.

While these transfers traditionally used to be based on money in cash, internet economy and its impact has changed preferences towards virtual money transfers. Based on the transfer of money via bank accounts and / or credit cars however, for any of these numerous transactions partners the account details must be know. This is of particular inconvenience as seldom such bank account and / or credit card details may be readily at hand.

Moreover, financial service providers issuing the credit cards and / or maintaining the banking account stress such small sum of money transfers with relatively high transfer fees. These are rendered either on the basis of a percentage of the transferred sum (e.g. 3-4%) or as an absolute minimum fee. In particular the later may render a small sum transfer as rather expensive and ineffective.

In addition, even when using these transfer methods despite their inconvenience and excessive costs, security or rather the preventing of fraud more and more becomes an issue: In former times, security in these transactions was, at least in part, assured by the necessity of presenting physical credentials during the transaction, for example providing a personal signature, presenting the physical credit cards or the like. In contrast to that, in transactions of today's internet economy such physical credentials are more and more omitted and replaced by other credentials, e.g. PIN code, credit card number and the like, which are frequently subject to virtual crimes and fraudulent use. This has lead to an enormous increase in fraudulent activities, such as for example phishing of credit card credentials or bank account identities. As a consequence, trust in conducting transactions is dramatically reduced and significant financial damage is created for businesses.

Moreover, convenience has emerged as a major driver of changes in user needs and habits. As a consequence, technical device are nowadays designed to hide technical complexity in order to provide a smooth and simple user experience. Similarly, money transactions may be perceived as providing a broad field for increasing usability and convenience: Using long BIC / IBAN number identity of individual's accounts and banking institutions are perceived as cumbersome and inconvenient. Moreover, typically TAN numbers and the like as transaction credentials are not at hand in typical day-to-day situations of small money transfers. Thus, money transfers have to be postponed to a time at a day, where all the necessities are at hand: An internet-enabled device, the banking account IDs (IBAN / BIS), TANs and the like. In contrast to this however, individuals would appreciate being able to transfer money at any given point at a day using devices they usually have at hand and information available in that very moment.

Thus, there is a need for improved methods, techniques and systems for trusted, easy, convenient, and yet cost-effective money transfer between individuals and transaction partner. This object is solved by the subject matter of the independent claims. Preferred embodiments are subject to the dependent claims.

In the following, a summary is provided to introduce a selection of representative concepts in a simplified form that are further described below in the detailed description. This summary is not intended to identify key features or essential features of the claimed subject matter, nor is it intended to be used in any way that would limit the scope of the claimed subject matter. Briefly, various aspects of the subject matter described herein are directed towards a technology by which trusted money transactions between individuals, and also between individuals and business partners are settled based on social network connections between these entities as represented in social graphs of virtual social networks to establish the transaction connection between the two transaction partners. Such transactions are directly settled as financial transactions between these partners using e.g. a mobile device application without the necessity of a further entity, like e.g. a bank, credit card company and the like, for clearing the transaction initiated on the mobile device. Thus, a computer implemented transaction system is provided that is enabled by a transaction application operating on a mobile computing device which is configured for settling transactions between transaction partners being connected via a social network connection as provided with a social graph read-out from a virtual social network in a closed-loop like fashion.

For that, in an example implementation a plurality of registered social network connections between a user operating a mobile computing device and a plurality of transaction partners I provided. The social network connections may stem from one or more social graphs stored by one or more virtual social network platforms. They are read-out from the social graphs, and maintained by a transaction application operated by the user on the mobile computing device;

Further, in an example implementation a transaction list provided by the transaction application which lists all transactions received and / or initiated by the user as a structured list of short text messages. In that transaction list provided by the transaction application, any entry of the list represents one transaction as a shor text message identifying key aspects fo the respective transaction.

In addition, the transaction application further may further provide an editor for initiating a money transaction. A user by way of the editor may initiate a money transaction based on identifying a transaction target from the maintained plurality of social network connections and an amount for the transaction. In response to that, the transaction's amount may be settled and cleared between the user and the transaction target within the transaction system in a closed-loop fashion.

In one aspect, any entry for a transaction in the list of transactions at least provides information on a transaction partner of the transaction, a transaction amount of the transaction, a current status of the transaction, and an explanatory text of the transaction. In a further aspect, the mobile device may be one of a smart phone, a laptop, a tablet, or a desktop computer. Further, in an example implementation, the transaction target may be one of an individual, a business, partner, a merchant, a local point of sales and / or a financial service provider. Moreover, in another aspect any of the transactions may be either of the type of a money transfer transaction transferring money for the user to the transaction target, or a money request transaction requesting money from the transaction target, the money request transaction requiring conformation by the transaction target, the conformation resulting in a money transfer from the transaction target to the user.

In a example implementation, the reading-out of the social graph comprises connecting by the transaction application to the virtual social network using the user's login to the virtual social network, reading-out the social graph of the user, and importing all connections represented with the read-out social graph into the transaction application. In one example implementation, the editor may provide macro functions invoked by triggering characters identify a social network connection and a transaction amount for directly settling and clearing the initiated transaction in a closed-loop fashion. In one aspect, at least one triggering character is provided that invokes a macro function to identify the transaction target based on one of the maintained a social network connections. In a further aspect, at least one triggering character may be provided that identifies a transaction amount and a type of the transaction, the type of the transaction pertaining to either a money request or a money transfer transaction.

In result, a transaction system is provided with closed-loop capabilities for settling and directly clearing trusted money transactions between the user and a transaction partner based on social network connections between these entities as represented in social graphs of virtual social networks to establish the transaction connection between the two transaction partners. Other advantages may become apparent from the following detailed description when taken in conjunction with the drawings.

### Brief Description of the Drawings

Figure 1 schematically shows an intermediary based transaction system.
Figure 2 schematically shows an example of a graphical user interface for a transaction application.
Figure 3 schematically shows a private-to-business transaction system.
Figure 4 schematically illustrates a mobile computing device operating a client side of an intermediary based transaction system.
Figure 5 schematically illustrates a transaction list provided by a client application of an intermediary based transaction system.
Figure 6 schematically illustrates a detailed view of a single money transaction settled via an intermediary based transaction system.
Figure 7 schematically illustrates the process of initiating a money transaction via an intermediary based transaction system.
Figure 8 schematically illustrates inputting and confirming a money sending transaction via a client application of an intermediary based transaction system.
Figure 9 schematically illustrates inputting and confirming a money requesting transaction via a client application of an intermediary based transaction system.
Figure 10 schematically illustrates confirmation of a money requesting transaction via intermediary based transaction system.
Figure 11 schematically illustrates search options within the graphical user interface of a client application in intermediary based transaction system.
Figure 12 schematically shows a mobile computing device operating a texteditor-based transaction application of an intermediary based transaction system.
Figure 13 schematically shows supportive display options of a texteditor-based transaction application of an intermediary based transaction system.
Figure 14 schematically shows an example sequence diagram of an intermediary based transaction between an individual and a business partner.
Figure 15 schematically shows an example sequence diagram of an intermediary based transaction between an individual and a business partner where the transaction partners are either not directly connected or net yet registered with the system.

### Detailed Description

Embodiments described herein provide computer- and network-based methods, techniques, and systems for settling trusted money transactions between individuals, and also between individuals and business partners based on social network connections between these entities as represented in social graphs of virtual social networks to establish the transaction connection between the two transaction partners and directly settle the financial transaction between these partners using e.g. a mobile device application without the necessity of a further entity, like e.g. a bank, credit card company and the like, for clearing the transaction initiated on the mobile device.

In at least one example embodiment, an intermediary-based, computer-implemented transaction-system for conducting transactions between entities connected via a social graph of a virtual social network is provided. As part of this system, at least one virtual social network platform stores social graphs connecting virtual entities of individuals and business partners, the virtual social network providing at least one virtual communication channel allowing any of the virtual entities to communicate with each other, and the virtual social network storing at least one social graph comprising a connection between at least one individual and at least one business partner. As an second part, a transaction provider is enabled to read-out the stored social graph and registers the connection. As a third part of the system, one or more mobile devices are provided that are configured for executing a transaction application provided by the transaction provider. The transaction application employs the registered connection to enable the at least one individual to create a transaction to the at least one business partner using the transaction application, such that a notification indicating the transaction is generated and transmitted to the at least one business partner by triggering the at least one virtual communication channel.

In at least one example embodiment, the notification is transmitted substantially in real time. In at least one further example embodiment, the mobile device is at least one of a smart phone, a laptop, a tablet, or a desktop computer. In at least one example embodiment, the business partner is a merchant at a local point of sales. In at least one example embodiment, the business partner is a further individual. In at least one example embodiment, the reading-out of the social graph comprises connecting by the transaction application to the virtual social network using the individual's login to the virtual social network, reading-out the social graph of the individual, and importing all connections represented with the read-out social graph. In at least one example embodiment, the transaction application employs a positioning capability of the mobile device to enable the individual to indentify the merchant using a location based service of the transaction provider.

In at least one example embodiment, a method is provided for performing the actions of any of the above described techniques. In at least one example embodiment, a computer-readable medium is provided having stored thereon contents, for example, computer-readable instructions that, when executed on a computer, are configured for performing the actions of any of the above described techniques.

The computer-readable medium may be, for example, a computer-readable memory means communicatively coupled to a computer system, which stores the computer-readable instructions. In other example embodiments, the computer-readable medium may include for example, computer-readable transmission mediums, including wireless-based and wired/cable-based mediums which store and/or transmit signals containing computer-readable instructions for performing the actions of any of the above described techniques.

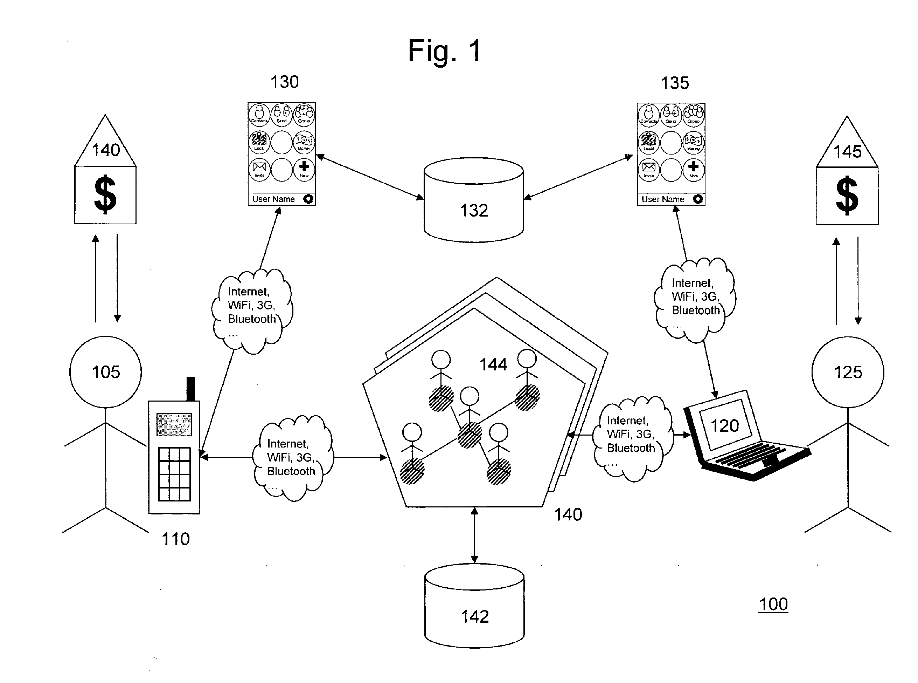

Figure 1 schematically shows the intermediary transaction system 100 that allows individual 105 to execute a financial transaction with individual 125. Figure 1 shows as a part of the intermediary based transaction system 100 a virtual social network 140 that conveys social graphs 144 of the members of the social network 140, namely individuals 105 / 125, which are stored in database 142. Moreover, as a further part, Figure 1 shows computing devices 110, 120 which may represent for example mobile phones, smart phone, laptops or other computing devices like pad based computers, desktop computers or terminals. Furthermore, the intermediary based transaction system 100 has further parts showing financial service providers 140, 145 and transaction application 130, 135 which may be adapted to the specific form of computing device 110/120.

Virtual social network 140 as an intermediary maintains memberships, or in other words virtual identities or virtual entities, representing various individuals 105, 125 which are connected to each other in form of a social graph 144. Social graph 144 stores connections between virtual entities being registered at virtual social network 140. Thus, each virtual entity being connected via social graph 144 is created on the basis of an account of individual 105/125 at virtual social network 140.

Social graph 144 may be established by virtual expressions of sympathy (for example "like" button in case of the example of social network "Facebook"), or may be based on a historic pattern of communication, i.e. individuals 105, 125 communicating with each other using a virtual communication channel, like for example electronic mail. It may be based upon the acceptance of the exchange of contact details that enables further direct communication (for example in chat based communication channels, like for example, Skype/instant messaging) or may be based upon any other form of linking individual profiles, contact details or virtual identities or entities representing individuals 105/125 to each other. Via the provider of the virtual social network 140 between the members of the social graph 144, a communication channel is established that allows individuals 105, 125 and members of social network 144 to communicate with each other directly, and in electronic form, via the services provided by the platform of the virtual social network 140. In one example this virtual social network 140 for these purposes provides virtual communication channels to registered users that allow for communicating amongst the users substantially in real time. In one example, virtual social network 140 provides an application that uses the social graph 144 stored in database 142 to allow individuals 105/125 to connect to each other and communicate with each other in various forms using the platform provided with the social network 140.

In order to get access to and use social network 140, individuals 105/125 in one example use computing devices as indicated in the intermediary based transaction system 100 with devices 110/120. Although in Figure 1, it is indicated that these computing devices 110/120 are represented as a mobile phone 110 and a laptop 120, any suitable computing device, mobile phone, smart phone and desktop computers or terminals allowing access to the internet may be used to connect individuals 105/125 as indicated in Figure 1.

Thus, the specific form of the computing devices 110/120 as well as the number of individuals and/or number of computing devices is not limited to the specific form and/or specific number of computing systems as shown in the example of Figure 1. In contrast, various methods of heterogeneous and homogeneous computing systems may be used and distributed in other manners in order to implement the invention.

In an example embodiment, the computing devices 110/120 and servers 142 may be implemented on general or special purpose computers or computing systems. These computing systems may be implemented in software, hardware, firmware, or in some combination thereof. One or more of them may include one or more central processing units (CPU'S), input/output (I/O) devices, memory or other computer-readable media, and one or more network connections.

Also, some or all of the components may be implemented or provided in other manners, such as at least partially in firmware and/or hardware, including, but not limited to one or more application specific integrated circuits (ASIC's), standard integrated circuits, controllers (e.g. by executing appropriate instructions, and including micro controllers and/or embedded controllers), field-programmer gate arrays (FPGA's), complex programmer logic devices (CPLD's), etc.

Some or all of the system components and/or data structures may also be stored as content (e.g. as executable or other machine readable software instructions, or structured data) on a computer-readable medium such as a hard disk, a memory, a network or a portable media article to be read by an appropriate drive or via an appropriate connection. Some or all of the system components and data structures may also be stored and/or transmitted as content of generated data signals (e.g. by being encoded as part of a carrier wave or otherwise included as part of analogue or digital propagated signal) on a variety of computer-readable transmission mediums, including wireless-based and wired/cable-based mediums. It may take a variety of forms (e.g. as part of a single or multiplexed analogue signal or a multiple discrete digital packets or frames). Such computer program products may also take other forms in other embodiments. Accordingly, embodiments of this disclosure may be practiced with other computer system configurations.

In the example of Figure 1, individual 105 creates, while accessing the internet via computing device 110, an account within social network platform 140 which is stored as an entity representing individual 105 on database 142. Based on that account, individual 105 can connect to other individuals thereby establishing a social graph 144 that represents the various connections that end at and/or originate from the entity in database 142 representing individual 105, in other words the virtual identity of individual 105 in social network 140.

While in the example of Figure 1, one social network platform 140 as well as one social graph 144 is depicted. In other examples, individuals 105/125 may be connected to various, and in particular more than one social network 140, may be part of various, and/or alternative social networks 144 stored in various databases 142.

Furthermore, the example of Figure 1 shows transaction applications 130, 135 that are accessed and used by individuals 105/125 via computing devices 110/120 amongst others for the purpose of conducting financial transactions. As the computing devices 110/120 may take on different forms, also a computing application 130/135 may have different formats adapted to the various operating systems/computing platforms of computing devices of 110/120 providing in each of these adapted forms at least similar functionality.

In an example, application 130/135 provides various functions to its users 105/125 namely maintaining a list of contacts, a transaction generation functionality, an account overview functionality, a capability to use location based services for creating transactions and functionalities for inviting friends, changing account details and the like.

In one example, users 105/125 may get access to transaction application 130/135 by registering with the virtual transaction provider 130 that provides e.g. via download or any other means, application 130/135 adapted to the computing device 110/120 used by individual 105/125. While registering to the virtual payment provider 132, individual 105 may provide details of a bank account or credit card registered with financial service provider 140 or may alternatively create a virtual electronic wallet with transaction provider 132 and preload this e-wallet with some amount of money.

After having registered with transaction provider 132, individual 105/125 connects its identity, or in other words its account, at transaction provider 132 with the social networks 140. In other words, the account of individual 105/125 at social network 140, such that via application 130 the social graph 144 that individual 105 is a member of can be read out from platforms 140 or rather databases 142. In one example, this activity is performed by the individual 105 indicating to transaction application 130 its account credentials of individual's 105 account at social network 140. In that example, in response to that, transaction application 130 employs the credentials to log onto social network 140, analyses the entity of social network 140 representing individual 105, in response to that identifies the connections representing the social graph of individual's 105 social network account and import all connections present in social graph 144 to be available for use by individual 105 via transaction application 130.

Thus, after having registered and connected with transaction application 130 to transaction provider 132, individual 105 is able to identify within application 130/135 any contact that individual 105 is connected to via social graph 144, in any virtual social network platforms 140 that individual 105 is a member of. More particularly, in an example shown in Figure 1, individual 105 is able to identify via application 130 individual 125, as individual 105 and individual 125 are connected via at least one social graph 144 provided with at least one social network platform 140.

Thus, based on the connection established within application 130/135, individual 105 registered with transaction provider 132 may now transfer any amount of money to individual 125 via application 130/135. In one example, individual 105 for that purpose starts application 130 on mobile phone 110 and searches individual 125 via a contact list functionality of application 130. After having identified individual 125 in the contact list of application 130, individual 105 inputs any amount of money to be transferred to individual 125 via transaction provider 135 by inputting the amount and confirming the transaction using credentials provided to the individual 105 during the registration procedure at transaction provider 132.

In response to that confirmation, application 130 triggers at least one platform 140 or several platforms 140 to generate a message, via the platform specific communication channel, to indicate to individual 125 that a financial transfer from individual 105 to individual 125 is intended. In case individual 125 has also been registered to transaction provider 132 and uses application 135 via laptop 120, the account overview functionality of application 135 indicates to individual 125 that money has been added to individual's 125 account.

However, in case individual 125 is not yet registered with transaction provider 132, the message provided to individual 125 via social network 140 will contain not only the indication that a financial transfer is intended, but in one example, an additional indication that for receiving the money, individual 125 should register with transaction provider 132.

In one example, a link may be provided with the message that enables individual 125 to access via computing system 120 directly, the registration procedure at transaction provider 132. As application 130/135 triggers the proprietary communication channels of platforms 140, messages indicating respective transactions between individuals 105/125 being members of the same platform 140 and being connected via one social graph 144 will be transmitted substantially in real time. Thus, in contrast for example to a bank transfer, money transfer based on the intermediary based transaction system provided with transaction provider 132 is executed substantially quicker.

Moreover, even if individual 125 in case of such transaction is not yet registered with provider 132, based on the read out social graph 144 available to application 130 after the registration of individual 105, enough information about individual 125 is present at transaction provider 132 to allow individual 125 to register with transaction provider 132 by just the confirmation of the registration. Only in case of the need to register for the bank account or other individual details, individual 125 may enter the automatically created user account at transaction provider 132.

Thus, transaction provider 132 enables financial transactions between individuals 105 / 125 using virtual social networks as intermediaries for the case that individual 125 is also registered with transaction provider 132 but also in fairly convenient form in case individual 125 has not yet registered with transaction provider 132.

In the example of Figure 1, transaction system 100 thus highlights the role of transaction providers 132 and virtual social network platforms 140 as intermediaries in executing transactions between individual 105 / 125.

In particular, instead of disclosing individual's 125 identity (e.g. account and the like) at financial servicer provider 140, individual 105 instead connects to individual 125 in a trustworthy way based on a privacy ensuring social network provider 140. In a further layer of privacy protection, transaction provider 132 enables individual 105 to use this established connection in social graph 144 for the purpose of transactions, for example money transfers, without any need to disclose or input any credit card credentials, bank account information and the like. In contrast, individual 105 is enabled by transaction service provider 132 to identify individual 125 via the transaction application 130, and to initialize a money transfer to individual 125 which is moderated and secured by transaction provider 132 without any transfer of bank account details, credit card credentials or the like. As none of this information is disclosed nor transferred during the transaction, any fraudulent of transaction system is prevented and the level of security of such transactions is significantly increased.

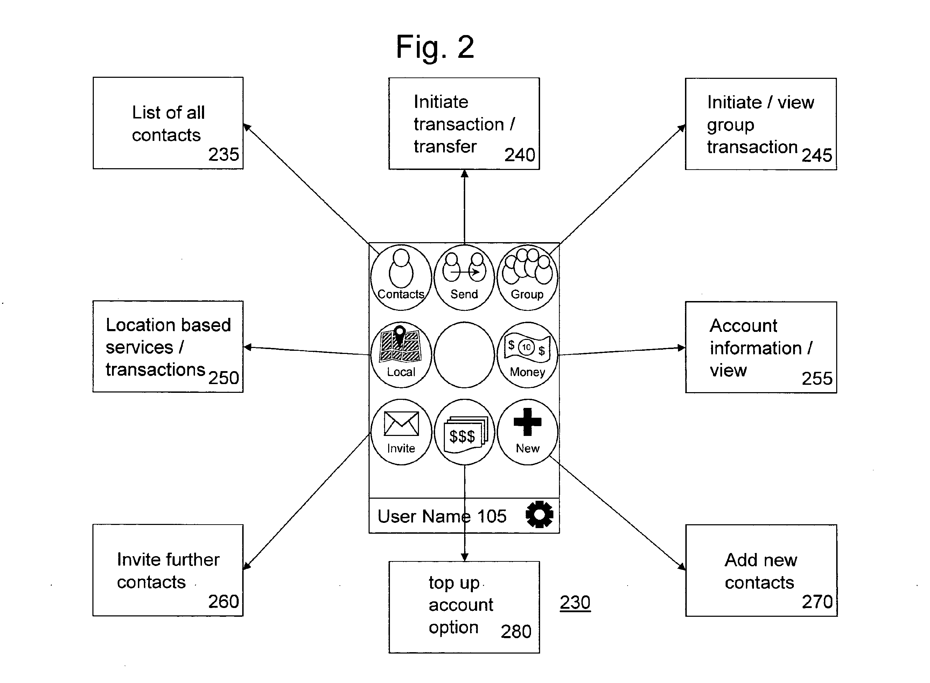

Figure 2 shows an example of the transaction application 230 which may be executed on any computing device 110/120. More particularly, Figure 2 shows an example of an user interface 230 with exemplary functionality of maintaining a contact list 235, creating a financial transaction 240, creating group transactions 245, using location based services 250, maintaining an account overview 255, inviting further contacts 260, topping up the user's account by way of a money transfer to the account 280 and adding further contacts 270. However, the specific appearance and further the number and kind of functionality shown in the example of Figure 2, are of rather exemplary character and thus further embodiments may show different/alternative appearances, may comprise additional/alternative functionality and enable alternative or further actions when using application 230.

In the example shown in Figure 2, function 235 enables individual 105 to maintain a list of contacts. The contacts may have previously been imported by individual 105 into transaction application 230 based on connecting to individual's 105 account with social network 140.

In an examplary embodiment, this list of contacts may be filled based on reading out the social graphs 144 of the virtual social networks 140 that individual 105 is connected to. For that purpose, functionality 235 may enable individual 105 to choose from a list of social network providers 140, those providers 140 that individual 105 is registered with, enter the respective login credential and confirm to add the members of individual's 105 social graph 144 stored at the chosen social network provider 140 to the list of contacts. In one example embodiment, at the same time these imported contacts are invited to also register with transaction provider 132.

In addition, individual 105 may add further contacts to the list of contacts 235 using functionality 270. The functionality 270 of contact adding may enable individual 105 to add further contacts using individual contact details of individual 125, like for example, an email address, a mobile phone number or other kind of electronic contact details.

Thus, based on the list of contacts 235 that individual 105 has created in its account at transaction provider 132, transaction provider 132 can read out available connections between 105 / 125 based on social graphs 144 stored in databases 142 of virtual social network providers 140. In other words, based on individual 105 choosing one or more social network providers 140 from a list of social network providers 140 presented with functionality 235, the transaction application 130 can use individual's 105 login credential to one or more of the chosen social networks 140 to log into these social networks 140. Transaction application 130 will then read out the respective social graphs 144 to identify social network links between individual 105 and one or more individuals 125, which are accordingly added by application 230 to the list of contacts 235 of individual 105.

Using any of the contacts listed in contact list 235, individual 105 may choose to transfer money to any of these individuals 125 using functionality 240. The money sending functionality 240 of application 230 allows individual 105 to choose any one individual 125 from the list of all contacts 235, and to specify an amount of money to be transferred to that individual 125.

In one example embodiment, the money transaction is confirmed by individual 105 with confirmation credentials provided to individual 105 during the registration procedure from transaction provider 132. These confirmation credentials may be, for example, a login name and password or can alternatively or additionally be any other credential, like for example a PIN number, a secret code or the like.

Thus, individual 105, in order to transfer money to individual 125, can now access transaction application 230 via any mobile computing device 110 or any internet terminal 120 and use the thereby accessed transaction application 230 to transfer money in a trusted way to individual 125. The security of such a transaction is significantly increased since for performing such transaction individual 105 may not need to enter any financial service provider 140 identity like for example, bank account details or credit card credentials. In one example implementation, individual may use a top up option 280 to transfer money to the account of individual 125 at transaction provider 132. Varies ways of transferring money to individual's 125 account may be used, for example a standard banking money transfer from bank 140 to the account at transaction provider 132, but also using debit card or credit cards as a means for payment, similarly other digital payment schemes as .e.g. paypal may used for that purpose. In some implementations, Point-of-Sales (PoS) payment terminals and / or cashiers can be used by individual 125 to transfer money for the purpose of topping up the account at transaction provider 132. As will be discussed in more detail later on, these PoS can also be used by individual 125 to retrieve money from the transaction system 100 in way similar to a standard ATM.

Moreover, the convenience of such transactions is significantly increased since application 230 may be used from any device regularly available to individual 105, for example a smart phone 110 or a laptop 120. By accessing transaction application 230, via for example smart phone 110, it is sufficient for individual 105 to identify a transaction target in contact list 235, enter any amount of money and confirm the transaction to transfer money to individual 125. Thus individual 105, for the purpose of an intended money transaction, is not obliged to know any financial service identity of individual 125 for example, individual's 125 bank account details, but can transfer money to individual 125 just on the basis of being connected to the individual via a social graph in virtual social network 140.

When generating a transaction via functionality 240, in one example embodiment individual 105 may add to the transaction additional information that is transferred to individual 125 together with the notification that a money transfer has been created. In contrast to traditional bank account transfers, this text message may be of unlimited length allowing further the adding of media files, for example movies, pictures and the like.

The notification generated in response to the confirmation of the transaction by individual 105, is in one example, sent by the transaction application 230 triggering the respective communication channel of virtual social network 140 that provided the specific link or connection between individual 105/125, that has been used by transaction application 232 to add individual 125 to the contacts list of individual 105.

In one example, individual 125 may have been added to contact list 235 of individual 105 by individual 105 choosing in transaction application 230 from a list of social networks 140 the specific social network "Facebook". In that case, when later transferring money to individual 125 the transfer notification generated by functionality 240 may thus trigger the proprietary communication channels of social network "Facebook" that has provided the link between individual 105 / 125 to transfer the notification generated by transaction application 230 to individual 125.

Thus, transaction application 230, via the functionality 240, triggers the proprietary electronic communication channels of various virtual social networks 140 to transfer notifications of an intended money transfer from individual 105 to individual 125. Using this triggering mechanism and message transfer via social networks 140, both convenience and security of the money transaction is increased. More particularly, by using the proprietary communication means of social networks 140, transaction application 230 can ensure that transaction notifications from individual 105 to individual 125 are transmitted substantially in real time. Individual 125 is notified, just a few seconds after individual 105 has confirmed the transaction, that such a transaction has been confirmed and money is intended to be transferred to individual 125.

Moreover, as transaction application 230 triggers social networks 140 to create transaction notifications, no electronic communication is created that may be subject to hacking, phishing and the like. Instead, for transferring transaction notifications from individual 105 to individual 125 proprietary, well-protected communication channels are used that usually are of higher security than standard electronic communication channels. However, in case such notification would be hacked, or by accident, observable by any third party the transaction itself stays protected from fraudulent interceptions as the notification just represents a notification. In other words, by observing the notification, no means become available to intercept that transaction provided by transaction provider 132 to re-route the money transferred in a fraudulent manner to any third party account.

For the case, that individual 125, being the target of the transaction initiated by individual 105, is not yet registered with transaction provider 132, the notification triggered via social network 140 may also contain a link to a registration procedure/functionality provided by transaction provider 132. Moreover, in case individual 125 was not added to the contacts list via functionality 235 and the reading out of social graph 144 from social network providers 140, but instead by using functionality 270 and adding an individual 125 based on the individuals mobile number and/or email address, similar notifications are sent via the communication channels (short messaging services using a mobile number, email using an email address an the like) provided with the contact details of individual 125 as being added using functionality 270. In that instance, individual 225, in case of a money transfer, similarly receives a notification stating the amount of money to be transferred, an explanatory text message input by individual 105 and further information regarding how to create a new account with transaction provider 132 to get access to the account at transaction provider 132 that the money from individual 105 has been transferred to.

After having confirmed a money transaction or received a notification of a money transaction, individual's 105 account in transaction application 230 is altered accordingly. Information on that account can be viewed by individual 105 through functionality 255.

In one example, functionality 255 provides an account overview to individual 105 such that a list of transactions is provided with respective metadata. The metadata may, for example, include a date of transaction, a date of notification, explanatory transaction information, a location of the transaction, and together with any amount an indication of whether it was a debit or a credit booking.

Furthermore, the list of transactions may be selectable by the individual 105 to show only specific transactions based on categories of the metadata. For example, individual 105 may select to only show private to private transactions, private to business transactions, group transactions, and incoming or outgoing transactions. Similarly, individual 105 may choose to select a list of bookings based on status information, such as transactions still to be received, transactions that have already been received, transactions that have been accepted and transactions that have been declined. The latter status information, in one example, may be generated based on group transactions that are generated using functionality 245 provided by transaction application 230.

With the group transaction functionality 245, individual 205 is enabled to create and join group transactions where a group of individuals join to perform a group buy, for example, for a birthday gift. In one example, when individual 105 may create such a group transaction via functionality 245, individual 105 may add further individuals 125 to the transaction and an amount of money to be received by any of these individuals 125 to that transaction. In response, group functionality 245 makes such a group transaction by listing the individuals 125 with their money amounts and associated status in terms of the amount having been transferred. The status would read "received" if the amount has been successfully transferred, or "receivable" if the amount is still outstanding.

Moreover, individuals 125 that have been added by individual 105 to such a group transaction may be provided with the opportunity to accept or decline their membership to such a group transaction. Thus, any individual having been added by individual 105 with a money amount to such a group transaction may further have a status of "accepted" if the individual 125 has accepted its membership to the group transaction, or the status of "declined" if the individual has not accepted its membership to the group transaction.

Transaction application 230 further may provide functionality 250 that enables money transactions as a location based service. More particularly, in one example, in contrast to a transaction between two private individuals 105/125 in addition the transaction application 230 may enable private-to-business transactions, for example at a local point of sales.

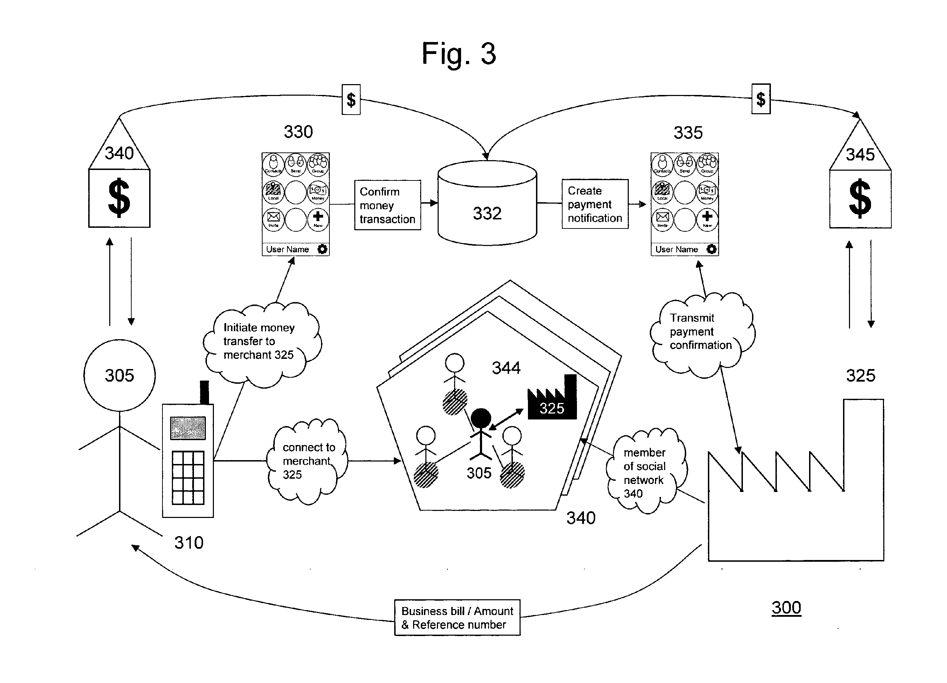

Figure 3 shows an example of an intermediary based transaction system 300 that enables transactions between individual 305 and a local business owner 325, namely a merchant 325. In the example shown in Figure 3, as outlined above, individual 305 is registered with transaction provider 332 and runs transaction application 330 on some kind of mobile computing device 310/320.

In one examplary scenario, when shopping at a local store and in order to pay for the purchase, a user starts transaction application 330 on mobile device 310 and may first, for example, check the account overview 255. In that example, account overview 255 indicates that the current account balance is sufficient to pay the purchase. In that case, or otherwise, user 305 may search via functionality 250 the current local shop using location based services such as for example identifying the current location using a GPS location. The user may then search the address book 235 of transaction application 230 for the particular store, checking favorites in location based services 250 for the particular store, or searching using any social network provider 340 for the particular store with our without using the current positioning provided, for example, by mobile device 310 to reduce the number of business locations offered.

For example, when using location based services by connecting via mobile device 310 to a particular social network 340, and searching there on the basis of the identified location (e.g. based on GPS coordinates or identification) and/or name of the current store, the particular store location and/or a focused list of potential stores can be offered when individual 305 selects the particular store it is currently shopping in.

In addition and/or alternatively, individual 305 may use transaction application 230 and/or any social network 340 to identify the particular store using key word and/or name search or the like. In addition and/or alternatively, in case individual 305 may have been at the store 325 before, the particular store 325 may also be found by individual 305 within a list of favorites stored in the contacts list 235 and/or the location based services functionality 250 of transaction application 230.

Having identified the particular location 325, individual 305 would be provided with additional information on the particular location 325 for example, general information on the store 325 and location, a map highlighting the position of the location 325 and/or pictures showing the location 325. Thereby, individual 305 will be able to unambiguously identify the particular shop 325 where a purchase is currently to be paid.

After having identified the particular location 325 from a list of merchant locations that is presented in response to a search, for example based on address book, favorites or location based services, a status is indicated in transaction application 230 which highlights whether or not that particular merchant location 325 is connected to individual 305 in any social graph 344 of any virtual social network 340.

In case individual 305 has not yet been connected with merchant location 325, individual 305 is prompted by transaction application 230 to connect with merchant location 325 using at least one of potentially several social networks 340 offered for establishing such connection via transaction application 330. In one example, an individual 305 may choose, for example, to connect to merchant location 325 activating a "Facebook" connecting function "like". Based on that, at least in one social graph 344 of at least one social network 340 the individual 305 and merchant location 325 are connected.

This established connection may now be used by transaction application 230 to convey a money transfer from individual 305 to merchant location 325 in order to pay the bill for the current purchase.

For that, individual 305 uses functionality 240 of transaction application 230, creates a money transfer choosing merchant location 325 as a target, enters the amount of the current purchase, and adds some explanatory message to help the merchant 325 to identify the payment of the current purchase bill. In other examples, besides paying the amount of the bill, a user 305 may be enabled, by transaction application 330, to add a vail to the amount using a slider that indicates percentages added to the sum of the purchase. In further examples, besides or as an alternative to the explanatory text of the money transfer notification, a user 305 may be enabled by transaction application 330 to add a reference number of the bill to be paid.

After having confirmed the money transfer from individual 305 to merchant 325, individual 305 may be prompted to post a commentary on the purchase experience at that specific merchant location 325 to the social network 340 that connects individual 305 with merchant location 325. Additionally, individual 305 may be prompted to add merchant location 325 to individual's 305 favorites in location based functionality 250 of transaction application 230.

As transaction system 300 employs virtual social network 340 to enable money transfers between individual 305 and merchant 325, connections between individuals 305 and a particular merchant 325 are conveyed. Thus, based on the transactions conducted via transaction system 300 any merchant 325 is supported in building connected groups of costumers 305 via social networks 340. Based on that, transaction system 300 not only provides a system for conducting payment transfers but also acts for merchant 325 as a customer loyalty system 300 ensuring to add more and more customers 305 of merchant 325 to a growing virtual group connected via social network 340.

This enables merchant 325 not only to process transfers with customers 305 being currently present at the point of sale 325. In addition, merchant 325 may conduct serveral customer loyalty schemes via transaction system 300: In one example, merchant 325 may create a number of bonus coupons that may be encashed at point of sales 325. Based on transaction system 300, merchant 325 may create such coupons in a controllable, trusted and electronic way. In one example, the number of coupons may be defined as a credit added to the account balance 255 of individuals 305 connected to merchant 325. In case any of these customers 305 enter shop 325, at paying of the purchase, this bonus credit may be automatically subtracted from the amount to be paid.

In that example, transaction system 300 allows merchant 325 to post bonus coupons via social networks 340 to a defined group of individuals 325 that may use theses bonuses only in the controlled way provided by transaction application 330 and transaction provider 332. Thus, any bonus coupon may be published specifically for a particular point of sales 325, be valid for a defined period of time (from ... until ...) that is controlled via transaction provider 332 and be dedicated to a defined group of people (i.e. individuals 305 being connected to merchant 325) with or without enabling the option to pass over that bonus coupon to any other individual being registered with transaction provider 332. That way, again transaction provider 332 act as a guarantor of the security of such loyalty scheme preventing any fraudulent use of such bones coupons based on the trusted workflow of the system 300.

In one example, in response to confirming the money transfer by individual 305 using functionality 240 of transaction application 230, and using confirmation credentials received during the registration procedure at transaction provider 332, transaction application 330 or transaction provider 332 triggers the virtual social network 340 that connects individual 305 with merchant location 325 to generate a message using the social network's 340 proprietary communication channels. The message indicates to merchant 325 that a money transfer has been executed, the transfer originating from individual 305 and referencing a current transaction at the location of merchant 325.

In another example, that message may contain at least information about the confirmed amount of money and an explanatory text. In other examples, the message may further contain a location 325 that indicates where the referenced purchase has been executed for which the money transfer has been confirmed, in order to confirm that the transfer has been made from the specific customer 305 that is currently in merchant location 325 and/or the notification message may contain some reference number of the bill to be paid at merchant 325.

In a further example, by using the social network's 340 communication channels, a notification message is transferred substantially in real time. The process of first handing a bill stating the purchase's money amount from merchant 325 to customer 305, then customer 305 confirming a respective money transfer via transaction application 330 and finally merchant 325 receiving the confirmation notification that the money of the respective bill has actually been transferred, only takes a few seconds, i.e. the payment of bills at a point of sales may thus substantially be performed in real time.

Thus, the intermediary based transaction system 300 provides a simplified but yet highly secure process of conducting payments at a local point of sales 325. After having installed the transaction application 330 on any computing device 310/320, for example a mobile phone 310, individual 305 may enter any local store 305 which may or may not be part of a social network 340.

In case the local store 325 is already a member of such virtual social network, a customer 305 just has to connect via the particular network's 340 connecting function to a virtual identity or the virtual entity of local store 325 to be able to transfer money using transaction application 330 to that merchant 325. In that case, merchant 325 receives a notification via the trusted communication channels of the social network 340 as a personal message prompting that a particular individual 305 (potentially with the individual' 305 current GPS location) has transferred a specific amount of money (namely the current amount to be paid at the cashier of merchant 325) with reference to a specific transaction (namely the current purchase).

Thus, within a few seconds and substantially in real time, local shop owner 325 will be notified that the customer 305 has just paid the outstanding bill and thus can immediately hand out the purchase to individual 305. This purchase can similarly be performed whether or not merchant 325 has been registered with payment provider 332 or not. In case, merchant 325 has not yet been registered with payment provider 332 as outlined above, the payment notification would, in one example, contain additional information for example a link that leads the merchant 325 to some registration procedure. This would allow merchants to quickly confirm a new account with payment provider 332 and thus establish access to the account that the payment of individual 305 has been credited to.

As indicated above, this process of payment using transaction application 330 is very simple, takes only a few seconds and is confirmed substantially in real time. In addition, besides this obvious convenience, the process further significantly increases privacy and security of such transactions at a point of sales 325. More particularly, as the money transfer notification is generated substantially in real time at the point of sales 325 at the point in time when the purchase has to be paid, the generating of any fraudulent fake messages that would indicate such money transfer (without actually representing one) are prevented.

As a further level of security, the notifications are transmitted using the trusted communication channels of social networks 340, thus, there is substantially no option for any third party to intercept the process. Even further, the trusted transaction provider 330 adds a further level of trust to the transaction, as it may act as a guarantor in the transaction for both sides, i.e. guaranteeing to merchant 325 that the amount of money notified is actually received at the merchant's 325 end and guaranteeing to user 305 that the money that is transferred from the account of user 305 is actually transferred to merchant 325.

Based on that, the merchant 325 is protected in terms that merchant 325 may not fear to encounter fraudulent use of means of payment, for example bogus money or fake credit cards, whereas user 305 is protected to encounter any fraudulent use of its financial identity in terms of banking account details, credit card information and the like.

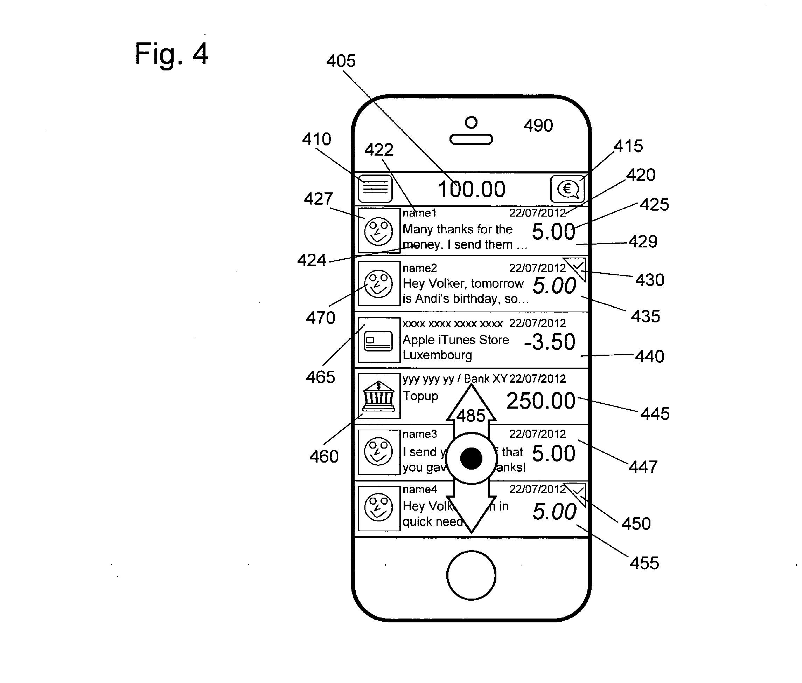

In one example implementation, transaction application 330 is implemented on a mobile computing device and/or for example a mobile phone or smart phone. Figure 4 illustrates an example implementation where transaction application 330 is implemented on a mobile phone 490. As illustrated in Figure 4, in that example implementation, transaction application 330 shows an account balance 405, provides access to menu options via control 410 and offers to initiate transactions via control 415. In the example illustrated in Figure 4, transaction application 330 shows besides the GUI controls 405-415 offering general application options a transaction list. The transaction list shows all transactions of user 305 having registered with application 330 running on mobile phone 490 as a list of text messages 429/435/440/445/447/455. Thus, in an example implementation, transaction application 330 lists all transactions related to user 305 as a list of short messages 429-455 comparable to, for example, a list of results of a internet-based search activity (e.g. a Google results list), a list of messages from a short messaging service (e.g. Twitter tweets), and/or an overview display of an email system. In other words, transaction application 330 enables a user 305 to perceive his or her money transactions in a format that the user 305 is familiar with as the same principles of usability are used as in various other contexts and applications frequently used by the user 305.

As indicated in Figure 4, in this example implementation, any transaction listed in transaction application 330 is formatted according to a template that is the same for any of the listed transactions 429 to 455. More particularly, the identity of the transaction partner of any transaction is indicated to user 305 with an icon or picture 427 and the name identity 422 of the transaction partner. Picture 427 thus may for example be a picture that user 305 has stored with a social network connection 144 or may for example be a picture that has been retrieved from social network 140 based on user 305 having connected with transaction application 330 via the social network 140 to another individual member of that social network 140. In case the transaction partner 325 is not an individual registered with social network 140 but instead an institutional transaction partner (like for example a bank 325) or a merchant 325, instead of a picture 427 showing the respective individual/transaction partner, an categorizing icon 460 may be used that identifies the category of the professional transaction partner 325, for example a bank. Alternatively, instead of showing a categorizing icon 460, also a brand image or a logo of the respective institution 325 being the transaction partner of the individual transaction 445 may be shown. In an example implementation, the transaction application 330 may be registered with a credit card as a means of payment, as for example issued by financial service provider 114. In that example, individual 305 may use that credit card in order to perform transactions which may then also be listed in the transaction list of transaction application 330. To identify such credit card transactions, instead of a category icon 460 or a picture 427, a credit card icon 465 may indicate that the transaction was initiated by a use of the credit card. It will be appreciated that these a illustrative example of an image-based identification 427 of a transaction partner 422. Other implementations may provide alternative or different identifications 427.

In addition, besides the figurative identification 427, in an example implementation the name 422 of the transaction partner is shown in any listed transaction 429. The name of the transaction partner may be the "real" name of an individual, the account name of the individual as registered with a social network 140, but may for example also be a numerical identity of, for example, an institutional transaction partner 460. In that example, if a transaction partner is, for example, a bank, instead of the name of the bank (or in addition to the name of the bank), identifying numerals like for example the IBAN or BIC numbers may be shown at position 422 in order to identify the transaction partner in addition to the respective figurative or iconic identification 460. Moreover, in case of a credit card transaction, besides the credit card icon 465, the credit card number may be shown at position 422 in order to identify the credit card that was used for the respective transaction 440.

In addition to the identification of the transaction partner both in terms of an image 427 and the name 422, the date of the transaction 420 as well as the amount of the transaction 425 is shown. In an example implementation, the appearance of the transaction amount 425 may indicate the character of the transaction. In the example shown in Figure 4, the "regular" appearance of transaction amount 425 indicates that this transaction has been confirmed and settled. In contrast, the "italic" appearance of the transaction amount in a transaction 435 indicates that the transaction is pending and has not yet been confirmed which additionally is indicated by a respective marker 430. Moreover, the "-" ("minus") in front of the transaction amount in transaction 440 indicates that this amount is deducted from the account balance 405, whereas other transaction amounts 425 (lacking the minus or having instead a "+" in front of the sum) indicate that this amount is added to the overall account balance.

In addition to identity information 427/422, date of transaction 420, and amount of transaction 425, any transaction entry 429 further shows an explanatory text 424 that has been input by the transaction partner 422/305 initiating the respective transaction in order to explain a purpose, or background of the transaction or the like. As indicated in Figure 4 and explained in more detail below, this text substantially is free text and may thus contain in an example implementation any number of characters, individual messages and the like. As indicated by control gesture 485, in an example implementation the list of transactions is scrollable such that user 305 may be enabled to scroll up and down the list of transactions.

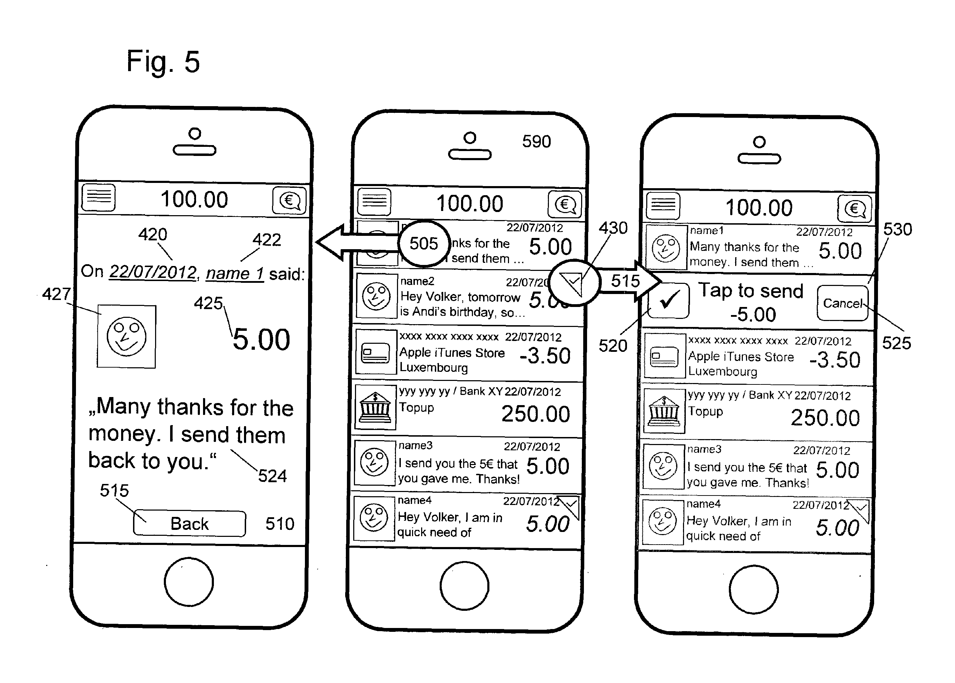

As indicated in Figure 5 for a transaction 429 listed in the transaction list of transaction application 330, a detailed view 510 may be accessed by performing a gesture 505 on the explanatory text 424 of any transaction 429 as indicated by the "tapping" gesture 505 in Figure 5.

As illustrated in Figure 5, in an example implementation, the detailed view 510 of a transaction 429 shows similar information as the summary of the transaction 429 as listed in the transaction list of transaction application 330. Namely, the detailed view 510 shows the date of the transaction 420, the name of the transaction partner 422 and in addition an identifying image 427 or as described above a categorizing icon 460, a company brand/logo 460 and/or a type of transaction icon 465. Besides the amount of the transaction 425, the detailed view 510 further shows the full explanatory text 424 which in an example implementation is truncated in the summary of the transaction 429 as listed in the transaction list. Thus, by accessing the detailed view 510 via gesture 505, the user of transaction application 330 can access the full explanatory text 524 which may be a rather long text in an example implementation only limited by the maximum text length as defined by the respective social network 140 used for transmitting transaction indications as described further above. Finally, an option 515, for example a control 515 is provided that allows for leaving the detailed view 510 in order to return to the transaction list.

As described further above, some transactions listed in the transaction list may have a pending character indicated both by the appearance of the transaction amount (in the example of Figure 5 indicated by the transaction amount being in italic letters) and a further "pending" marker 430 that indicates that the respective pending transaction 435 has to be confirmed in order to be processed. As indicated in Figure 5, in one example implementation, by using a gesture 515, marker 430 may be triggered as indicated by "tapping" gesture 515. In response to that, a confirmation option 530 is shown that allows for cancelling the respective transaction by triggering a respective cancellation control 525 or confirming the transaction by triggering the respective confirmation control 520. In response to triggering the confirmation control 520, the transaction thus is confirmed and immediately processed such that it is then shown as a processed transaction (showing the transaction amount in regular letters, showing no longer a pending marker 430) in the transaction list of transaction application 330. In response to triggering the cancellation control 525 however, the respective transaction 435 is cancelled and excised from the transaction list of user 305. The initiator 325 of the transaction 435 is informed in both cases either that the transaction has been confirmed or that it has been cancelled, as will be outlined in more detail below.

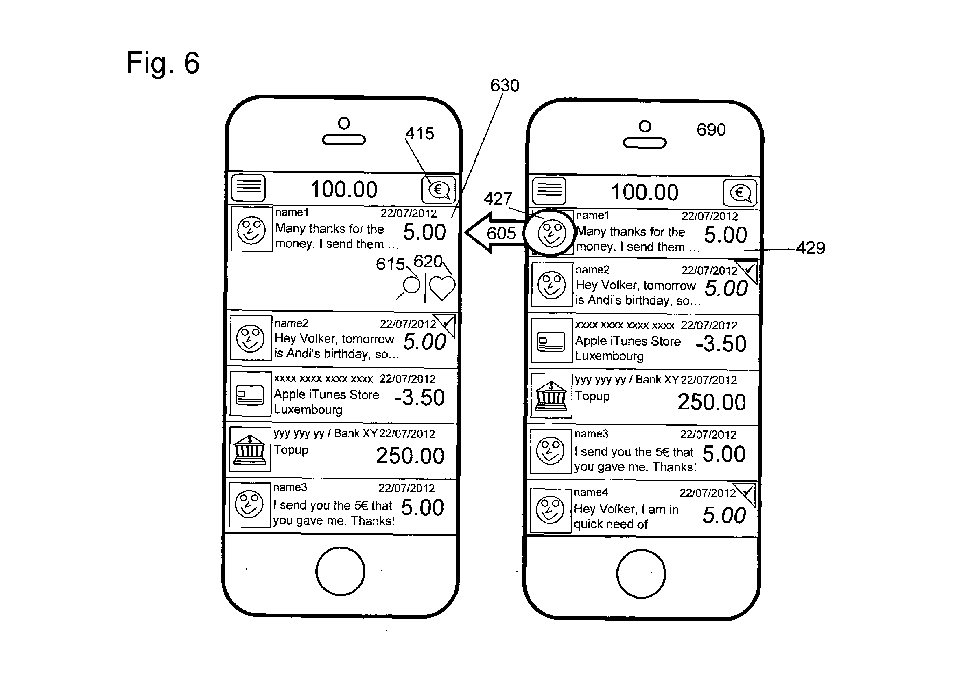

Figure 6 shows a further example implementation in which the iconic or image identification of the transaction partner allows for immediately initiating further transactions. As indicated in Figure 6, in an example implementation performing a gesture 605 on icon/image 427 expands the respective transaction list entry 429 to provide the user of transaction application 330 with further options. As indicated in Figure 6, the expanded view 630 in an example implementation provides the option for requesting money from the respective transaction partner 325 of transaction 429 by way of the request option 610. Similarly, the expanded view 630 in that example implementation provides transaction option 415 that allows the user of transaction application 330 to send money to or request money from the respective transaction partner 325 of transaction 429. Additional options may be provided, for example searching all transactions of the respective transaction partner of transaction 429 by way of a search option 615. Finally, option 620 provides a favourite control 620 that allows the user to add the contact, i.e. the respective transaction partner 422 to a favourites list of contacts in order to have a quicker access to that transaction partner further, i.e future transactions. In an example implementation, when entering a name of a transaction partner, starting from the first character on, this favourites list 620 may be queried in order to show to the user those contacts from the favourites list 620 where the name 422 starts with the input character.

The money transaction control 415 in an example implementation provides shortcut for sending to / requesting money from transaction partner 422 of transaction 429. Thus, by triggering control 415, the user of transaction application 330 may be prompted to input a transaction amount and an explanatory text in order to create such a transaction. Thereby, in this example implementation, via gesture 605 and control 415 an easy and convenient way of transferring or requesting money from a established transaction partner is provided as a form of a shortcut to transactions. Operation control 415 will be described in more detail in the following.

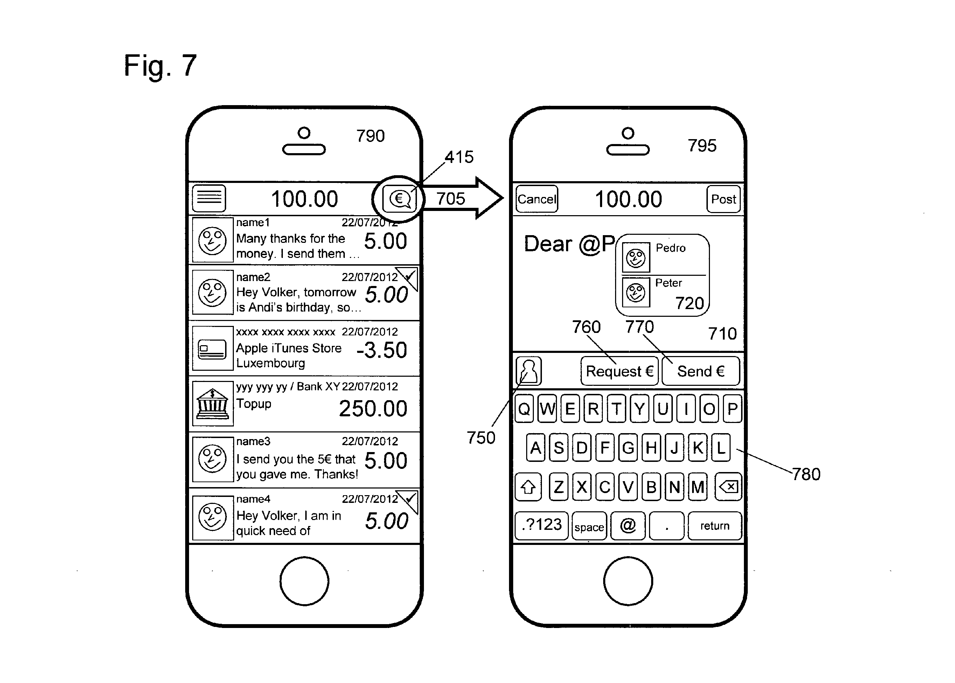

As indicated in Figure 7, control 415 allows for initiating transactions independently from any entry of the transaction list via gesture 705 which triggers the respective control 415. As indicated in Figure 7, by triggering control 415 by way of gesture 705, a new display 795 is provided which has a text entry field 710 and a control bar which holds a friends contacts control 750, a money request control 760, and a sending money control 770. Further controls are provided that allow for typing in text as indicated by controls 780.

By using controls 780 or alternatively, for example a keyboard of the respective mobile computing 790, the user of transaction application 330 types in a text into text field 710. This text corresponds to the explanatory text 424 as illustrated in Figure 4 and/or explanatory text 524 as illustrated in Figure 5. As indicated in Figure 7 in an example implementation, the text field provides further functionality by invoking macro function triggered by respective trigger characters.

In the example of Figure 7, the "@" serves as an example for such a trigger character which signals that the following word (which in the examples of Figure 7 starts with the character "P") indicates a name of the transaction partner to which the intended transaction is directed to. Thus, interface 710 provides functionality for invoking in response to the user typing in a triggering character, for example an "@" sign, further functionality, for example as indicated in Figure 7, a contacts list 720 as a sub frame of interface 710 allowing the user to select one contact out of the contacts listed in contacts list 720 in order to be filled into the text that the user types into field 710. Alternatively, the same contact list may be invoked by triggering a friends contacts control 750. As can be appreciated, while in the example of Figure 7 the "@" sign is illustrated as a triggering character, any other additional or alternative characters may be used as triggering characters for invoking similar or alternative (and in particular additional) functionalities within the interface 710.

In an example implementation, as described also described above, after having input the first letter (in that example "P") a name of a favourite from the favourites list may be shown in list 720, even if that would not necessarily fit in the alphabetical sequence. In an example implementation, these favourites further added into the friends list 750. in an example implementation, the display of the favourites in the friends list 750 may be accomplished based on a distinct favourites tab. However, it can be appreciated, that also other forms of displaying favourites in terms of shortcuts to these contacts may be provided in order to enable favourites 620 and / or friends 750 to be easily displayed as a preferred type of contact.

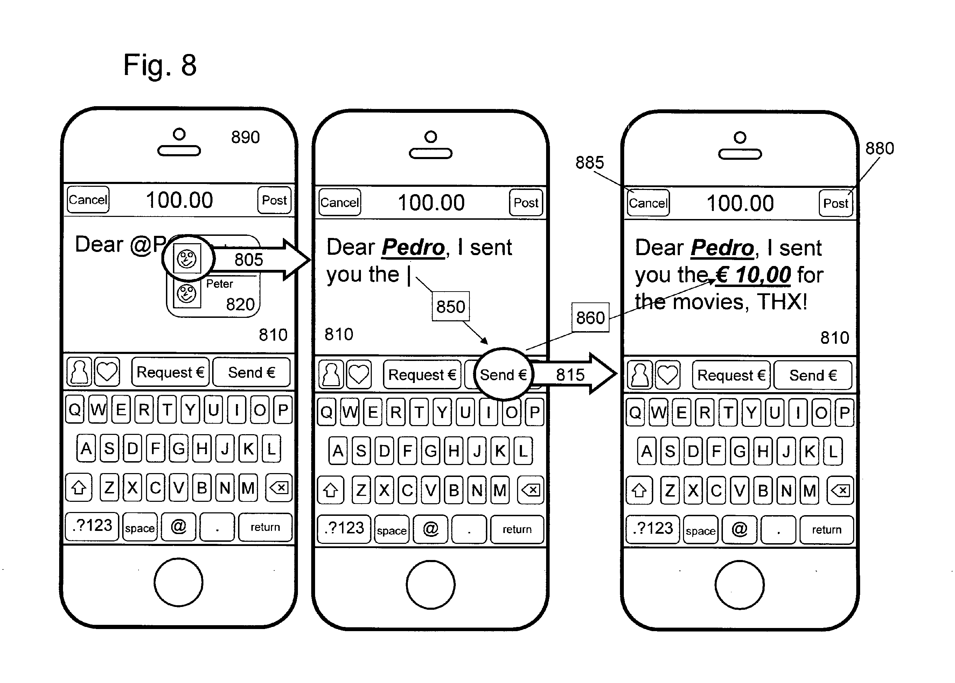

In the example of Figure 7, typing in the triggering character "@" invokes contact list 720, and the further typing in of the character P limits the list of contacts listed in contact list 720 to contacts where the name starts with the respective character "P". As described further above, these contacts listed in contact list 720 are read out from the social graph of social network 140, and thus, selecting one of the contacts from contact list 720 results in using the respective social network connection in order to connect the initiating transaction partner 305 typing in the message in interface 710 and the transaction partner 325 as selected from contact list 720. Selecting transaction partner 325 by gesture 805 as indicated in Figure 8 in an example implementation results in adding the name of the contact (in the example of Figure 8 the name "Pedro") automatically into the text of interface 810.

However, as indicated above, the name provides rich information (in the example of Figure 8 indicated by the appearance of the name) in that the name by way of macro functionality identifies the social network connection 144 that allows for settling the intended transaction with a transaction system 100. As indicated in Figure 8, after having entered the addressee 325, or rather transaction partner 325, of the intended transaction, either by selecting from contacts list 820, or using contacts control 750, or further/alternative means, the user of transaction application 330 may continue entering the respective explanatory text 424/524 in text field 810.

In order to indicate the amount and type of transaction (in terms of requesting or sending money), the user continues triggering requesting control 760 or sending control 770 as indicated by gesture 815. Thus, when having entered the text in field 810 up to the point where a transaction amount would have to be entered, at step 850, a user may either trigger control 760 or control 770 by gesture 815 in order to indicate whether a requesting or sending transaction is initiated. Triggering any of the two controls 760/770 allows the user in step 860 to enter numerals for the money amount. For that purpose, in an example, implementation controls 780 may change from a character keyboard to a number keyboard. Confirming the respective amount in step 860 may lead to enter a respective amount and currency into the text entered in interface 810 (as indicated by the money amount in the field 810).

In a further example implementation, a currency symbol may, similar to the "@" sign described above, serve as a triggering character, such that any figure/number entered following the respective currency symbol (in the example of Figure 8, the Euro syrnbol) is interpreted as the transaction amount. Thus, similar to the above-described entering of a transaction partner, also here, triggering characters may be used to allow interface 810 to interpret the text entered by the user of transaction application 330, such that, for example, a currency symbol (e.g. "€") and the numerals (e.g. 10,00) following the currency syrnbol may automatically be interpreted as a transaction amount invoking further functiona lities, namely, processing a respective transaction corresponding to that amount. In an example implementation, for example, a plus "+" or a minus "-" may be used as triggering characters for indicating a requesting (minus) transaction or a sending (plus) transaction. As will be appreciated, several others, and in particular alternatives or additional characters may be used as triggering characters in order to automatically identify the character and the amount of the initiated transaction.

Finally, cancellation control 885 may be used to cancel the initiating of the transaction, whereas the confirmation control 808 is used to confirm the respective transaction, such that the new transaction is added to the transaction lists of both the initiating transaction partner 305 and the target transaction partner 325.

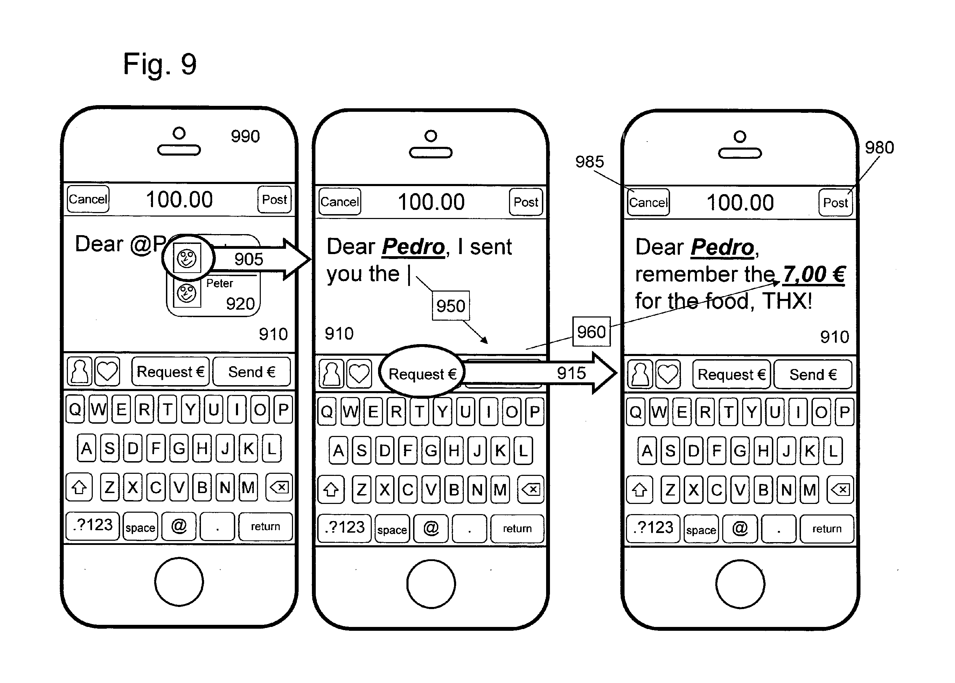

Figure 9 illustrates a similar sequence as in Figure 8 with the difference that gesture 915 triggers control 760 (instead of control 770 as triggered by gesture 850), thereby initiating a money request transaction (instead of a money sending transaction).

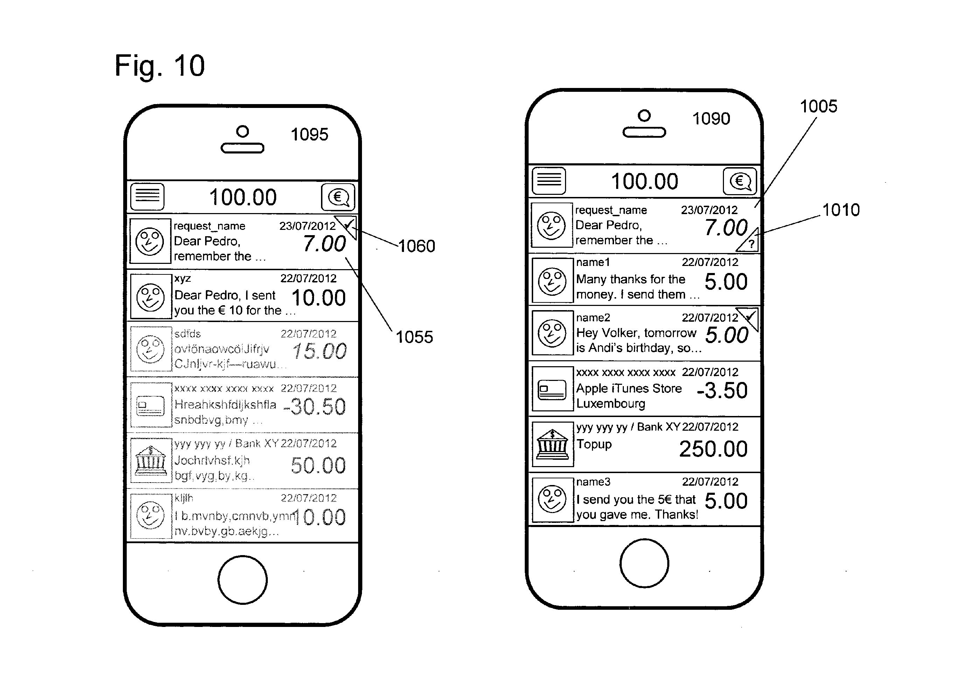

Figure 10 illustrates the outcome of the initiating of a money request transaction, as illustrated in Figure 9. Figure 9 shows two mobile devices, namely mobile device 1090 which is operated by the user 305 initiating the money request transaction illustrated in Figure 9. In addition, mobile device 1095 is illustrated that is operated by the target transaction partner 325, i.e. the transaction partner that the money request transaction illustrated in Figure 9 is directed to.

As illustrated in Figure 10 in an example implementation, in both transaction lists, i.e. the transaction list of the initiating user 305 and the target transaction partner 325, the new money request transaction is added as a new entry to the transaction list. However, in an example implementation as illustrated in Figure 10, the appearance is different as transaction 1005 in the transaction list of the initiating user 305 shows a marker 1010 that indicates that the respective money request still has to be confirmed by the target transaction partner 325. In contrast, in the transaction list of the target transaction partner 325 as shown on device 1095, the transaction 1055 shows a confirmation marker 1060 that may be similar to confirmation marker 430 as described further above. Thus, in an example implementation, as long as the target transaction partner 325 has not yet confirmed the requested transaction 1055 as, for example, illustrated in Figure 5 by gestures 515 and 520, the respective requesting transaction 1005 shows a marker 1010 indicating that the transaction is still pending. Accordingly, in case the user of mobile device 1095 has confirmed transaction 1055 as illustrated in Figure 5, the marker 1010 disappears in transaction 1005 on device 1090, thus indicating a confirmed and processed transaction.

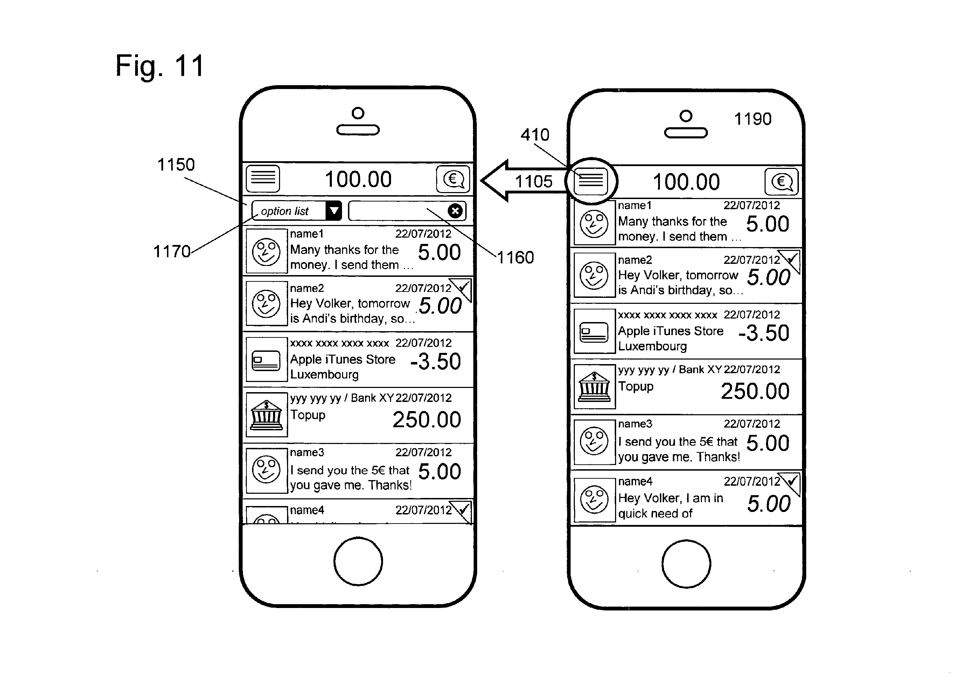

Figure 11 illustrates further general menu options that may be accessed by triggering control 410 as indicated by gesture 1105. Namely, search options may be provided that allow for searching the list of transactions using a free text field1160 or a predefined search list 1170 as provided with search bar 1150.

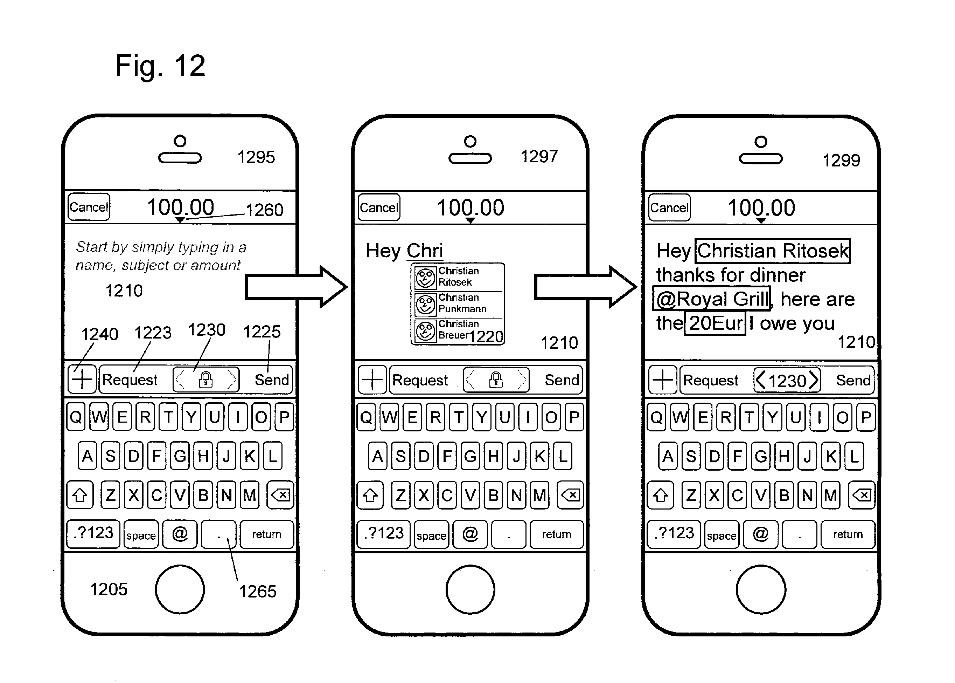

Figure 12 illustrates further implementation examples of a transaction application 330 on a mobile computing device 110. In the example of figure 12, display 1295 may have been invoked by triggering of control 415 as indicated by gesture 705 in Figure 7. In that way, display 1295 may serve as another example of a display 795 in a further example implementation of a transaction application 330.

In another example implementation, display 1295 of Figure 12 may serve as a start screen for a transaction application 330 that allows a user to directly input money transactions to be performed by transaction application 330. In that example, control 1260 may provide access to additional controls and / or a transaction list as depicted in Figure 4. These additional controls invoked via controller 1260 may be similar to the ones provided by triggering control 410 of device 490 in Figure 4, but in other implementations, control 1260 may also provide access to a transaction list similar to the transaction list as depicted in Figure 4.

In an example implementation, display 1295 besides control 1260 providing access to further menu options shows a text input field 1210 or editor 1210. In that example, a user of the mobile device 1205 may type text into text field 1210 by use of keyboard 1265. However, the text input may not only be provided through a physical or virtual keyboard, but may also in some implementations also be accomplished by way of means of voice recognition.

Below text input field 1210 or editor 1210, various controls are provided and displayed with display 1295. More particularly, in an example implementation, a slider control 1230 may be provided that comprises at least two sliding options, namely a request option 1223 and a send option 1225. In that example, slider control 1230 may be used to slide to the left hand side (or right hand side) in order to activate the request option 1223 or maybe used to slide to the right hand side (or left hand side) in order to activate the send option 1225. However, as indicated by the padlock icon in display 1295, the slider control is locked at this point as there has yet no text been input into text field 1210.

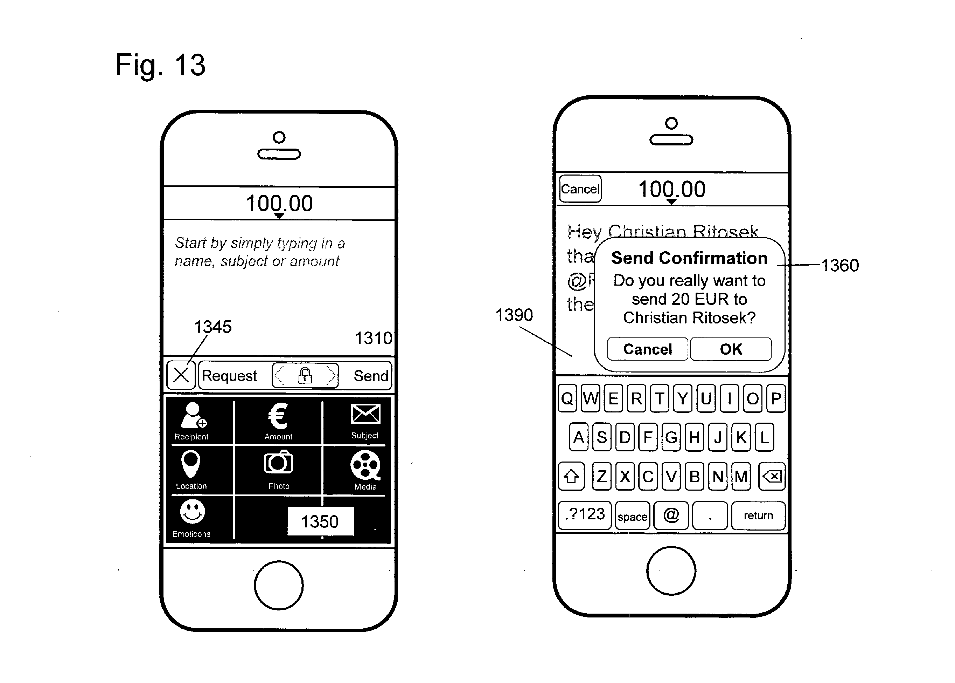

Moreover, control 1240 is provided that provides access to additional controls that may serve as support for inexperienced users of device 1205. Activating control 1240 provides access to a further menu 1350 which is described further below within the context of Figure 13.

As indicated in Figure 12, in display 1297, a user has started to input text into text editor 1210. More particularly, the user has input a salutatory address expression ("Hey") and the first four characters of an individual's name ("Chri"). As will be appreciated, the specific salutatory address expression as well a the specific number of characters of the individual's name just serve as illustrative examples.

As indicated in dialogue 1220, text editor 1210 is configured to provide further macro functionality that invokes additional editors 1220 automatically to support in speeding up input of transaction texts into text editor 1210. More particularly, in an exemplary implementation, these macro functions of text editor 1210 continuously process functions of semantic text recognition.

In an example implementation, these functions of a semantic text recognition recognize an input text "Hey" as a salutation expression. In response to such recognition of a salutation expression, a further functionality of text editor 1210 is invoked that serves for recognizing names of transaction partners input into text field 1210. More particularly, the functionality invoked in response to the recognition of the salutatory expression continuously querys the following characters being input as the next word following onto the salutatory expression against contact information in an extended social network of the user of device 1205 in order to indentify contacts matching the so-far been input characters. In further implementation examples, the semantic text recognition functionality may be focussed on solely identifying building blocks of a financial transaction based on a preset rule set and / or triggering operators available to the text recognition functionality.

In other words, text editor 1210 is provided with various functions of semantic text recognition that interpret the text being currently input continuously in order to provide further functionality for input assistance.

These semantic text recognition functionalities in exemplary implementations may be triggered by trigger characters or by triggering expressions that typically are followed with a building block of a transaction. In example implementations, these building blocks of a transaction are set to be the name of a transaction partner, i.e. the person that money is intended to be sent to or from which money is intended to be requested from, a transaction amount, i.e. an amount of money together with a currency identification, and a subject, i.e. a reasons for payment. In other implementations, further, and/or alternative building blocks may be implemented in order to enrich the semantic text recognition functionality of text editor 1210 as will outlined further below within the context of figure 13.

In the example implementation of Figure 12, the semantic text recognition functionality of text editor 1210 has identified a salutation expression "Hey" and thus expects as the next following expression, i.e. as the expression following onto the salutation expression, a name identifying the transaction partner as a first building block of the transaction currently being input into text editor 1210. In the example of Figure 12, as a recognized salutation expression the expression "Heya" is shown. However, it will be appreciated that numerous others, and in particular additional and alternative salutation expressions, may be stored with the database of the semantic text recognition functionalities of text editor 1210 in order to allow a most reliable recognition of a wide variety of trigger expressions.

In some example implementations, the recognition of a transaction partner's name by semantic text recognition functionality of text editor 1210 may be triggered by the input of trigger operators that may individually be set by the user of transaction application 330 or may be preset. Such a triggering operator may for example be an "@" sign that indicates that as a next building block of the transaction being input for example a name of a transaction partner or the content of a reason for payment follows the "@" sign. Thus, the semantic text recognition functionality of text editor 1210 may trigger the recognition of a transaction partner's name in response to the recognition of a salutation expression or the recognition of a transaction partner's name may be triggered because of an input of a trigger operator, for example an "@" sign or any other preset trigger operator.

Independent from the type of triggering event (text recognition & interpretation, triggering operator ...), in response to that triggering event a subdialogue 1220 is invoked within text editor 1210 in order to enable the user operating mobile device 1205 to select a transaction partner's name from a list of names provided with dialogue 1220. The names provided in dialogue 1220 are selected based on the characters that have so far been input into text editor 1210 (in the example of Figure 12, the characters "Chri"). These already-input characters are queried against the list of names and contacts provided with the social network of the user operating mobile device 1205. In an example implementation, these names are provided by social graph 344 of social network 340. In further example implementations, further contacts are provided by searching the phone contacts, email addresses or online available contacts connected to mobile device 1205 or made available for and connected with transaction application 330. In these example implementations, the term "social network" may be understood in a rather broad sense describing all individual contacts of the user accessible via mobile device 1205 and thus available for transaction application 330 such that they can be queried in order to identify contacts that contain the characters input so-far (in the example of Figure 12, the characters "Chri").

In the example of Figure 12, the user operating mobile phone 1205 may select one character from the list 1220. As indicated in display 1299, the full name of that contact may in response to this selection being automatically input into text editor 1210. As indicated by the box surrounding the name of the transaction partner in display 1299, the name of that contact selected from list 1220 not only serves as a name in terms of a semantic string but is further interpreted by text editor 1210 as one of the necessary building blocks of a transaction to be executed via transaction application 330.

As indicated in display1299, in this example at least three building blocks create such a transaction, namely (a) a name of a transaction partner (in the example of Figure 12 "Christian Ritosek"), (b) a reasons for payment e.g. a location (in the example of Figure 12 "@Royal Grill"), and (c) an amount for the transaction (in the example of Figure 12, "€20"). As discussed above in detail, the inputting of each building block (e.g. reasons for payment, transaction amount, ...) may be supported by using triggering operators and making use of the semantic text recognition functionality provided with text editor 1210.

Regarding the reasons for payment, for example, in the example illustrated in Figure 12, the triggering operator "@" indicates that a location as a reason for payment follows on that triggering operator. In some example implementations, a subdialogue similar to dialogue 1220 for selecting one from a number of available locations as input for the reason for payment may be triggered by the input of a respective triggering operator from a list of triggering operators (in the example of Figure 12 an "@" sign). This subdialogue invoked by the input of a triggering character may be provided within text editor 1210 of may overlay text editor 1210 in order to allow the user of mobile device 1205 to select a location as a reason for payment from a list of available locations, the list being narrowed down using the already been input characters of the location. In example implementations, a list of locations may be available using the extended social network of the user operating mobile device 1205. Such extended social network of the user of mobile device 1205 may comprise the social graph 344 of social network 340 and further contacts of the mobile phone's 1205 contact list and any further contact available to the user via mobile device 1205. Any contact and / or location and / or information of that extended social network may be used for providing the user with a list of options based on a number of characters that have already been input to select from these option using a subdialogue 1220 the content of a transaction building block. Thereby, e.g. the input of the reasons for the payment maybe supported similar to fashion in which the input of a transaction partner is supported according to the example illustrated in Figure 12.

In example implementations, for a further transaction building block "transaction amount", as a triggering operator besides an "@" sign also a currency symbol ("€", "$"...) or any expression of a currency (for example "EUR", "euro", "dollar", "Dollar", "US-D", and the like) may be used. In case of the transaction amount, any numerals or numbers preceding or following such trigger operator like for example a currency symbol, a currency expression and/or an "@" sign would be interpreted as an amount of the transaction which is indicated by the box surrounding the "€20" expression of Figure 12. However, it can be appreciated that besides currency symbols and/or currency expressions or "@" signs, the semantic text recognition functionality of editor 1210 may also provide further - and in particular alternative - trigger operators for the transaction amount. In addition, triggering operators like a "+" maybe interpreted by that recognition functionality as triggering a money sending transaction whereas triggering operator like a "-" may interpreted as triggering a money requesting transaction.

As indicated in display 1299, a user may in some exemplary implementations be indicated that some expressions of the input text are interpreted by editor 1210 as functional building blocks of a transaction by highlighting the respective parts of the input text. This is indicated in display 1299 by the three boxes surrounding the building blocks of a transaction partner ("Christian Ritosek"), a reason for payment ("@Royal Grill"), and an amount of the transaction ("€20"). It will be appreciated that any form of highlighting for emphasized appearance may implement such indication such that the surrounding boxes rather serve as an illustrative example of such highlighting.

Further, in display 1299 as all building blocks of the intended transactions are input, the locked slider control 1230 is now operable (i.e. unlocked) to be used to either trigger the request option 1223 or the sending option 1225. In alternative implementations, semantic text recognition functionalities of editor 1210 may further be configured for interpreting the text in order to suggest one of the request option 1223 or sending option 1225 based on the text being input in text field 1210. In the example of Figure 12, such continuous interpretation may serve for analyzing from the text input that in the example of Figure 12 a money sending transaction is intended. In the example of Figure 12, the semantic text recognition functionality of text editor 1210 may perform such continuous interpretation based on the analysis of common semantics of the expressions being input. In the example of Figure 12, the expression "owe you" may thereby be interpreted as triggering a money sending transaction (whereas an expression "you owe me" may serve as triggering a money request transaction).

Figure 13 shows further displays of mobile device 1205 of Figure 12. More particularly, Figure 13 shows menu options 1350 that are provided to the user of mobile device 1205 after triggering control 1240 of display 1295 of Figure 12.

As illustrated in Figure 13, menu options 1350 provide various building blocks of a transaction, namely a recipient as a transaction partner, a transaction amount, a subject as a reason for payment, a location, a photo, a media and/or emoticons.

As indicated by menu 1350, besides a reason for payment, a transaction partner and a transaction amount, a transaction may be built from a number of further building blocks that all may be identified by text editor 1210 using semantic text recognition functionality. For the inexperienced user, however, menu 1350 allows for inputting a transaction in a structured way by offering distinct controls 1350 that each trigger the input of one of the building blocks. In this example, triggering any of the controls showing symbols of the resective transaction building block triggers in response the guided input of the respective information using suitable subdialogues 1220.

In that example, after triggering the "recipient" button, a user will be provided with a submenu 1220 that allows for typing in characters of a recipient name as indicated in Figure 12. this typing in of characters narrows down a list of potential candidates from which a user may select one as the intended transaction partner.

Similarly, by pushing the location button, a user may be provided with a list of locations where again the user may narrow down the list of candidates by inputting some characters in order to then identify a candidate from the list of offered locations.

Similarly, by pushing the subject button, a user may be provided with a free text input editor that allows for typing and texts.

Further, Figure 13 indicates that a transaction text may be enriched by using photos and/or media files in order to add emotions and memories to the respective transaction. This is further highlighted by the option to input emoticons that allow for a character-like expression of emotions within the subject-text of a transaction.

Control 1345 allows for leaving that submenu and returning to a display 1295 / 1297 / 1299 after either having input some, all or none of the building blocks offered by menu 1350. Thus, by menu 1350 the user is provided with an optional and effective tool supporting the input of respective transactions along the structured logic of transaction building blocks.

After finishing input of the transaction and triggering control 1230 to initiate a request 1223 or a sending money transaction 1225, in an example implementation, a confirmation message 1360 may be invoked in order to provide the user with a final confirmation option. This confirmation option may be provided within text editor 1210 or as an overlay superimposing text editor 1210.

As indicated in display 1390, the functionality provided with text editor 1210 of transaction application 330 may in some example implementations not only provided via the native transaction application 330 but may additionally or alternatively be implemented and provided via an application programming interface (API) or as part of an operating system. In this example, the API of the operation system extension provides access to the semantic text recognition functionality via any messaging and / or chat application being operated on mobile device 1205. In other words, in these example implementations, any messaging application operated on mobile device 1205 automatically accesses the semantic text recognition functionality as described within the context of text editor 1210 such that the intention of inputting a money transaction and building blocks of such transaction are identified within any chat messaging window invoked on mobile device 1205.

For example, when using a chat application like e.g. "WhatsApp", a user may use tags as triggering operators in order to indicate that a money transaction is intended to be input. A chat application and the "WhatsApp" in particular serve however only as illustrative examples. In some implementations, the use of tags and / or triggering operators may also be invoked for and / or by other chat / messaging applications like for example SMS, Skype, Messenger and the like.

In these examples, a tag like e.g. "#TS" may be interpreted by the semantic text recognition functionality provided with the API interface 1390 such that the text for the specification of a money transaction is expected to follow. Based on that, the semantic text recognition functionality is triggered that allows for identifying building blocks of the money transaction from the further text being input similar to the recognition as described further above within the context of text editor 1210. In addition, a further input of a "#" sign may be interpreted such that the input of the money transaction is finished.

In an example implementation, such money transaction input into any text editor provided by any messaging application, chat application and the like executing on mobile device 1205 might look like this: "#TS Volker Breuer €10+ thanks for lunch#.

As described above, the triggering operator "#TS" in this example is interpreted by the provided API interface as the start of a text specifying a money transaction.

In that example, the name of the transaction partner "Volker Breuer" is automatically identified based on the provided context of the extended social network, or the contacts list in the mobile phone as described above within the context of text editor 1210.

In that example, the currency symbol "€" indicates that a transaction amount follows and accordingly, in that example, the figure "10" is interpreted as such transaction amount of currency "Euro". The "+" following onto the figure "10" further indicates a sending transaction (whereas in this example implementation a "-" would be interpreted as a money request transaction).

Finally, the free text "thanks for lunch" would be interpreted as a reason for payment and could potentially have any length or content.

The final "#" in this example ends the text of the money transaction specification and would thus invoke confirmation dialogue 1360 as superimposing the respective messaging application and / or general purpose text editor. That confirmation dialogue 1360 would replicate the outcome of the continuous interpretation of money transaction building blocks derived by the semantic text recognition functionality of the API from the text being input into the editor of the respective messaging and / or chat application running on device 1305.

As will be appreciated, this above outlined example of an input transaction text only serves as an illustrative example. In particular, in other implementations, further and/or alternative symbols and / or triggering operators and / or characters may be used to identify any of the building blocks of a money transaction from text input in any messaging or chat application being operated on mobile device 1205. In addition, in some example implementations, the sequence of building blocks may be different to the example outlined above. That means that the building blocks of e.g. a recipient name, a transaction amount and/or a reason for payment could be listed in any arbitrary sequence. Thus, as a further illustrative example, the above outlined transaction may also be input in the following form: "*pay +20 Eur Volker Breuer Thanks for lunch*. Here the triggering operator "*pay" serves to indicate that the following text comprises a money transaction definition. In addition, the final "*" indicates that the text of that transaction definition has ended.

In an example implementation, after having input an "end of specification" triggering character (in the above examples a "#" or "*") a confirmation message 1360 is invoked that is superimposed to the text editor 1390 of the respective messaging or chat application and contains the money transaction having been recognised from the input as described above in order to request a confirmation from the user operating mobile device 1205 regarding the continuous interpretation of the input text provided by the API interface of the present invention.

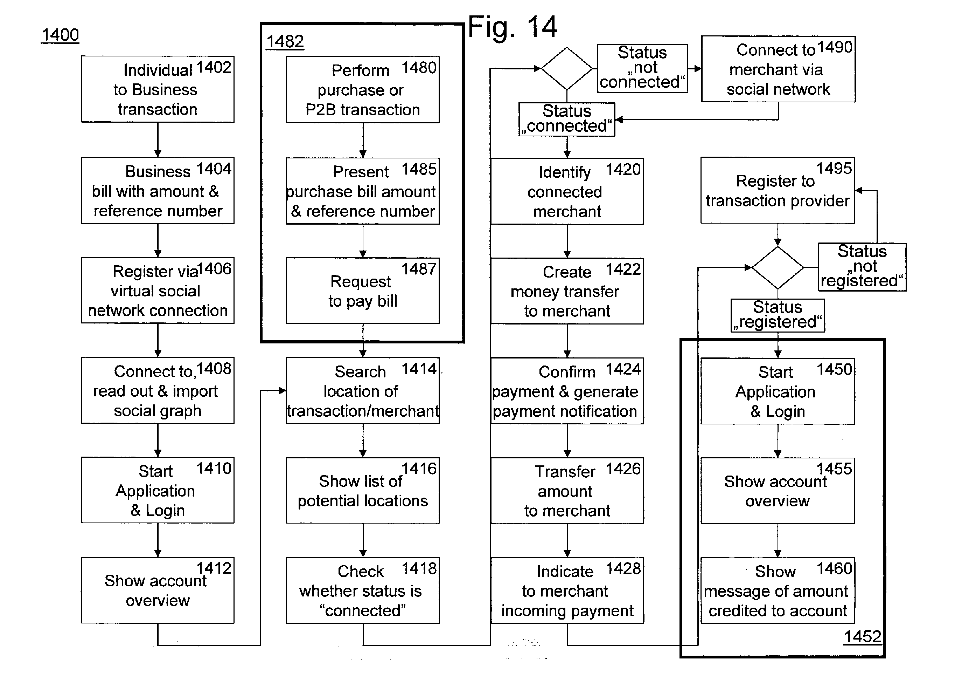

Figure 14 shows a further exemplary sequence diagram illustrating examples of procedures performed with a transaction system 300.

The sequence depicted in Figure 14 shows an individual-to-business transaction 1400 that is conducted by an individual 305 in interaction with a business partner 325. More particularly, in step 1402 of Figure 14, an individual-to-business transaction is initiated. This step may comprise any real-life transaction like, for example, a purchase in a local store or any other form of transaction and/or purchase. Thus, the business transaction itself may be performed in a real-life environment at a local store 325 but may also be performed as a virtual transaction, for example via the internet, or any other form of transaction platform.

One example of such transaction is illustrated in the sequence of Figure 14 by transaction 1482. This transaction starts with the performing of a purchase or any other form of a private-to-business transaction 1480. In response to that purchase or private-to-business transaction 1480, merchant 325 presents individuals 305 a bill that shows the amount to be paid and may or may not show a reference number to identify the respective bill in step 1485. Merchant 325 will, in response to presenting such bill, request to have the bill paid in step 1487. At that point, a transaction 1480 between an individual 305 and a merchant 325 has been performed and resulted in a bill presented to individual 305 and requested to be paid.

The presented bill with a bill amount and bill reference number may, in step 1404, thus be the basis for the payment process initiated by individual 305 using transaction application 330. To use transaction application 330, individual 305 has previously, or at the moment of payment, registered to transaction provider 332 using any social network 340 in step 1406 of Figure 14. In response to registering with transaction provider 332, individual 305 engages and authorizes transaction application 330 to connect to, read-out and thus import the social graph 344 that is represented by individual's 305 account or virtual entity in virtual social network 340.

While in the sequence 1400, shown in Figure 14, the steps of registering 1406 and importing the social graph 1408 are illustrated as part of the payment process, these steps may also be performed as preparatory activities which are not necessarily performed in sequence, as highlighted in Figure 14, and in close context of the payment process. In contrast, these activities may be performed at a different point in time and in varying sequences. More particularly, any of the steps 1406/408 may have been performed previously. Thus, at the moment of payment, individual 305 may be able to login and use transaction application 330 on the basis of a previously performed registration 1406 and importing 1408 of social graph 344.

For performing the payment of the presented bill, individual 305 starts transaction application 330 on any mobile device 310/320 available or accessible to the individual 305. After the starting up and login procedure in step 1412, individual 305 is, in the example of Figure 14 by application 330, presented with an account overview that informs individual 105 about the available amount of money that can be transferred using transaction application 330. However, in other embodiments, after having studied and logged into transaction application 330, individual 305 may also be presented with alternative views provided by transaction provider 332.

In order to pay the bill presented by merchant 325, individual 305 will now, in step 1440, use the transaction application 330 to search locations of transaction partners and/or merchants 325. For this search, individual 305 my use the virtual social network platform 340, for example by performing a key word and/or name search to identify the transaction partner 325. In addition and/or alternatively, individual 305 may in step 1414 search for merchant 325 using the individual's 305 address book and/or favorites stored in transaction application 330. In other examples, individual 305 may also use positioning capabilities of mobile device 310/320 to make use of location based services provided by transaction application 330. In that example, the geoposition of individual 305 may be estimated using, for example, a global positioning system (GPS) signal, thus identifying the geoposition of individual 305 using positioning capabilities as built in device 310. In response to this positioning, the geoposition may be linked to additional information available to transaction application 330 like, for example, city maps, points of interest, merchant locations, and the like. Alternatively, or in addition, the geoposition may also be used by virtual social network platform 340 to further support and narrow down the list of locations identified using a key word search of individual 305 to identify merchant 325.

In response to the search performed in step 1414 by any of the means described above, a list of potential locations is created in step 1416 that relate to the search performed and shows at least one location 325 matching the criteria used by individual 305 for performing this search. In response to identifying merchant 325 in the list created in step 1416 by individual 305, in step 1418 a status of the identified merchant 325, in relation to individual 305 is tracked. More particular, in step 1418, individual 305, by using transaction application 330, checks whether merchant 325 is already part of individual's 305 social graph 344 that has been previously imported in step 1408 from a social network 340. In other words, in step 1418, via transaction application 330, or alternatively using for example, virtual social network platform 340, individual 305 checks whether there is a social graph connection established between individual 305 and merchant 325 and whether this connection has already been imported to transaction application 330.

In case the status is found to be, or indicated as, "not connected", this indicates that there is no social graph connection between individual 305 and merchant 325 imported to transaction application 330. Thus, in this case, in step 1419, individual 305 connects to merchant 325 or rather the virtual identity of merchant 325 in virtual social network platform 340. Thus, either previously or at the moment of payment, individual 305 has connected to merchant 325 in a social graph 344, such that in step 1418 of Figure 14, the status is indicated as "connected".

Accordingly, from the identified list of potential locations, or rather merchants 325 in step 1416, individual 305 can identify the merchant 325 as connected in step 1420. Based on that connection, individual 305 may use transaction application 330 to create a money transfer to merchant 325 in step 1422. For that, individual 305, in one example uses functionality 240 of transaction application 230 to create and confirm a payment which results in generating a payment notification in step 1424.

For creating such payment, in one example, individual 305 creates a money transfer transaction, in transaction application 330, which identifies a target which is in the example of Figure 14, identified as the connected merchant 325. Moreover, this transaction will identify an amount of money to be transferred that may for example be manually entered by individual 305 in transaction application 330. In alternative embodiments this amount may be indicated to transaction application 330 via some means of near-field communication (NFC) at the cashier of merchant 325 that links to transaction application 330 executing on mobile device 310, like for example a Bluetooth interface at the cashier of the point of sales 325, and / or a near field communication reader at the retail cash register of merchant 325 that engages in a wireless communication with an NFC chip in mobile device 310.

In some embodiments, the payment generated in transaction application 330 will further show an identifying text that may, for example, consist of a message text manually entered by individual 305 and/or the reference number identified on the bill presented by merchant 325 in step 1485. After having entered the necessary information to the money transfer, individual 305 confirms the transfer transaction and thus sends the entered amount to merchant 325 in step 1426, using transaction application 330 and the money transfer services of transaction provider 332.

In response to that transfer in step 1426, transaction provider 332 will trigger the virtual social network platform 340 to generate a notification message to the virtual identity or entity of merchant 325 representing merchant 325 in virtual social network 340. As described above, transaction provider 332 triggers virtual social network platform 340 such that the respective notification is generated using the trusted communication channels of platform 340 therefore the notification via platform 340 is transmitted to merchant 325 substantially in real time.

Thus, in step 1428, merchant 325 is presented with a notification that indicates to the merchants an incoming payment that may reference the bill presented in step 1485 on the basis of the bill's reference number, and indicate that the money transferred equals the bill amount as presented in step 1485. This indication is presented in step 1428 to merchant 325 in any case, i.e. whether or not merchant 325 is registered with transaction provider 332.

In case merchant 325 has not yet been registered with transaction provider 332, this notification transmitted via platform 340 to merchant 325 in step 1428 will additionally comprise a link, or other indications, to support merchant 325 in registering with transaction provider 332 in step 1495. Similar to the individual's 305 registration step 1406, also merchant 325 will register in step 1495 with transaction provider 332 using virtual social network platform 340 associating an account of merchant 325 registered with transaction provider 332 with merchant's 325 virtual identity of accounts in virtual social network 340.

In case merchant 325 has registered with transaction provider 332, after having started transaction application 335 and login at step 1450, merchant 325 may be presented with an overview of merchant's 325 account at transaction provider 332 in step 1455. As indicated above, after starting and logging into transaction application 335 in step 1450, merchant 325 may in other examples be presented with a different view. However, using transaction application's 230 functionality 255, merchant 325 may identify a balance representing the current status of the account of merchant 325. This account overview in step 1460 shows a message of the amount that has been credited to merchant's 325 account by transaction provider 330.

As indicated in Figure 14 however, the sequence of operating transaction application 335 at the end of merchant 325 as indicated via numeral 1452, is optional for the case of merchant 325 also being registered with transaction provider 332. Using the sequence of steps 1402 to 1428, individual 305 may also transfer money to merchant 325 without merchant 325 being registered to transaction provider 332.

The fulfillment of the money transfer enabled by sequence 1400 is done by transaction provider 332 initiating a money transfer from financial service provider 340 to transaction provider 332 and further from transaction provider 332 to financial service provider 345 as indicated in Figure 3. In that example, individual 305 may hold a bank account at bank 340 or may possess a credit card of credit card issuer 340 and the like.

The money transfer from financial service provider 340 to transaction provider 332 may be performed using means of a bank transfer or alternatively a credit card booking or other means of financial services. However, alternatively, individual 305 may also create a virtual wallet, i.e. an e-wallet, at a transaction provider 332. In that case, individual 305 may transfer money from financial service provider 340 to transaction provider 332 in advance of any transaction or purchase as indicated in sequence 1400. Thus, money transfers from financial service provider 340 to transaction provider 332, and further from transaction provider 332 to financial service provider 345, do not necessarily have to be synchronized and being performed in a strict sequence as indicated in Figure 3. In contrast, a money transfer from transaction provider 332 to financial service provider 345, maintaining for example a bank account of merchant 325, may be performed by transaction provider 332 transferring money from an e-wallet of individual 305, the e-wallet having been loaded previously by an initial money transfer of individual 305, thereby decreasing the account balance of such e-wallet of individual 305.

In one example, for creating and pre-loading the e-wallet at transaction provider 332, the role of financial service provider 340 may also be taken over by merchant 325. In that example, instead of having a financial service provider 340 as an issuer of a means of payment, e.g. a credit card, somewhere in the chain of transactions, a closed loop of transactions can established by individual 305 and merchant 325 registering with transaction provider 332, individual 305 not only paying a purchase at merchant 325 but in addition paying in money to the e-wallet of individual 305 at the cashier of merchant 325.

Thus, in an example implementation, transaction system 300 may enable the direct settling of transactions between two transaction partners 305 / 325 in a closed loop fashion. As illustrated in figure 10, in that example implementation a provider of a means for payment may thus be omitted or rather be optional. In other words, in an example implementation, transaction system 300 may connect individual 305 as the initiator of a money request or a money transfer transaction with individual 325 as the target transaction partner of the initiated transaction. This connection may be established via a social network connection as provided by the social graph 344 of a social network 340. This social-graph enabled direct connection between the transaction partners 325 / 305 may be maintained by transaction application 230 being executed for example on mobile computing device 490. Thus, any transaction initiated by individual 305 within the closed loop system 300 by way of transaction application 230 may directly be cleared and settled using transaction system's 300 account balances 405 - without necessarily forwarding clearance and settling to a system-external financial service provider 340. Rather than that, the connection to such financial service provider 340 from transaction system 300 or rather a user's 305 account in transaction system 300 may rather be provided as an option in order to provide compatibility for example to point of sales payment infrastructure. However, if a point of sales is also established via an account and social network connection within transaction system 300, also that connection may used without the further necessity of interaction with any financial service provider 340. Still, individual 305 as being registered with system 300 may use an established social network connection with a point of sales 325 to retrieve cash from a point of sales an atm-like fashion. Accordingly, also vice-versa, individual 305 may tp-up the account insystem 300 with a cash-in money transfer at that point of sales 325.

In that example, merchant 325 not only acts as a point of sales 325 but in addition acts similar as an ATM, an ATM of transaction system 300. As financial service provider 340 is omitted in this closed loop transaction system 300 also any banking fee is omitted such that any money transfer that way may be conducted at substantially lower costs. Moreover, with potentially any merchant 325 being enabled to act as an ATM of system 300 - as long as merchant 325 is registered with transaction provider 332 - individual 305 will be provided with a rather unlimited number of terminals where they may pay in or take of money in cash. In one example, the closed loop system further allows for omitting even the fulfillment of individual money transfers as merchant 325 and transaction provider 332 may balance out their accounts not on the basis of individual transactions (e.g. individual purchases) but on the basis of time-based restoring of account balances.

In that example, at the end of a defined period of time, for example at the end of each business day, an account balance is created between any merchant 325 and transaction provider 332 that balances out the sum of purchases to be paid, money taken of by individuals 305 at merchant 325, money paid in by individuals 305 at merchant 325 etc. such that the account balance between transaction provider 332 and merchant 325 is restored with just one single financial transaction per time period, e.g. business day - that way dramatically reducing any financial services fees within closed loop transaction system 300. Thus, based on closed loop transaction system 300 individuals 305 are provided with a rather unlimited number of service point 325 where individuals 325 may conduct money transfers in a "walk by" manner at a fraction of the traditional costs.

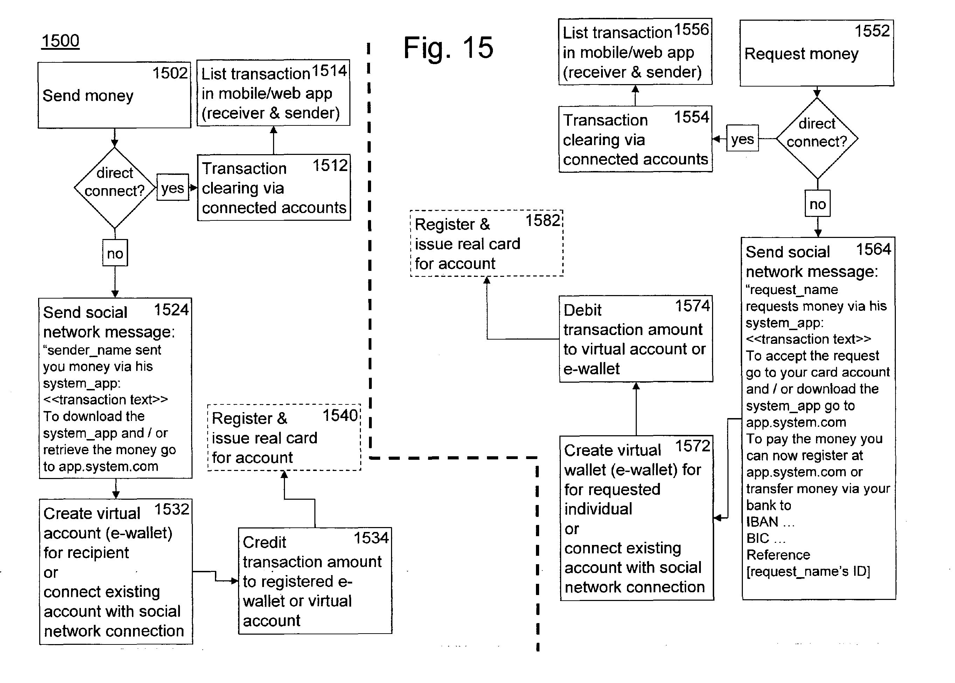

Figure 15 shows exemplary sequences 1500 of performing transaction 429-455 in case the target transaction partner 325 is not yet registered with the transaction system 100 and/or does not yet operate transaction application 330 on a mobile device 490.

Steps 1502 to 1540 herein describe a money sending transaction whereas steps 1552 to 1582 describe a requesting money process. As indicated by the steps of Figure 15, both types of transactions, namely sending money 1502 and requesting money 1552 in the example implementation of Figure 15 in principle follow similar steps which becomes apparent from the parallel illustration of both sequences.

Namely, in an example implementation initiating a sending money transaction as indicated in Figure 8 results in controlling whether the initiating transaction partner 305 and the target transaction partner 325 are directly connected by for example via a social network link 144 established by transaction application 330. If that is the case, the two accounts are directly connected via transaction system 100 and thus direct clearing of the transaction via the connected accounts can be performed in step 1514. The result of that is indicated in Figure 10 in terms that the transaction is added to the list of transactions of both the receiving target transaction partner 325 as well as the sending transaction partner 305 in step 1514. In example implementations, this list of transactions may be shown in a mobile transaction application 330 as indicated in Figures 4 to 11 but may as well alternatively or additionally be shown on a respective web-based application interface.

If the two accounts are not yet connected via transaction system 100, in step 1524, a social network message is sent via the social network link 144 to the target transaction partner 325 stating that money has been sent from the initiating transaction partner 305, stating the respective transaction text entered into explanatory text field 710, and providing the target transaction partner 325 with the information of where to download the respective application in order to have such transactions directly cleared between the two connected accounts in future and / or where to find a system's homepage n order to retrieve the money from there. An example message is illustrated in step 1524.

If target transaction partner 325 is not yet registered with transaction system 100, a virtual wallet or e-wallet is created for the receiving individual 325 in step 1532 in transaction system 100. This e-wallet or virtual card account is used for clearing the transaction by crediting the transaction amount to that virtual wallet in step 1534. If however target transaction partner 325 has registered with transaction system 100 but the social network link has not yet been established as a direct connection between the transaction partners, the existing account is connected in step 1532.

In response to target transaction partner 325 following the link included in the social network message and being registered or rather registering with transaction system's 100 webpage, the target transaction partner's 325 the account is connected with the virtual e-wallet previously created in step 1532.

As an additional, optional service after having finished the registration, for the respective virtual wallet a "real" credit card may be issued such that the transaction partner 325 is registered with the transaction system 100 and has registered with the transaction system 100 a credit card or debit card that being issued and sent for the account to target transaction partner 325 in step 1540.

Similarly, initiating a requesting money transaction as indicated in Figure 8 starts with testing whether the initiating transaction partner 305 and the target transaction partner 325 are directly connected by for example via a social network link 144 established by transaction application 330. If that is the case, the two accounts are directly connected via transaction system 100 and thus direct clearing of the transaction via the connected accounts can be performed in step 1554. The result of that is as indicated in Figure 10 that the transaction is added to the list of transactions of both the receiving target transaction partner 325 as well as the sending transaction partner 305 in step 1556. In example implementations, this list of transactions may be shown in a mobile transaction application 330 as indicated in Figures 4 to 11 but may as well alternatively or additionally be shown on a respective web-based application interface. In effect, on the basis of the direct connection, the transaction is directly settled without any necessity of banking accounts, credit cars and the like.

If the two accounts are not yet connected via transaction system 100, a social network message is sent via the social network link 144 to the target transaction partner 325 stating that money has been requested from the initiating transaction partner 305, stating the respective transaction text entered into explanatory text field 710, and providing the target transaction partner 325 with the information of where to find a system's homepage in order (re-)view the money request and / or to download the respective application in order to have such transactions in future directly cleared between the two connected accounts. An example message is illustrated in step 1564.

If the two accounts are not yet connected via transaction system 100, an e-wallet or virtual wallet virtual is created for the receiving individual 325 in step 1572 in transaction system 100. This virtual wallet or virtual card account is used for clearing the transaction by debiting the transaction amount to that virtual card account or e-wallet in step 1574. If however target transaction partner 325 has registered with transaction system 100 but the social network link has not yet been established as a direct connection between the transaction partners, the existing account is connected in step 1572. In order to fullfil the request in response to the registering / connecting of accounts, the target transaction partner may se varies means of payment similar to the topping up option 280 as described within the context of figure 2. For example, transaction partner 325 may use a "standard" bank transaction that is directed to the transactions system's IBAN / BIC identity and references the money request by way of e.g. a reasons-for-payment text specifying request_name's ID.

In response to target transaction partner 325 following the link included in the social network message and being registered or registering with transaction system's 100 webpage the target transaction partner's 325 account is connected with the virtual card account or virtual wallet previously created in step 1572.

As an additional, optional service, after having finished the registration and in an example implementation after receiving an initial payment or top-up to the newly created account for the e-wallet or virtual car account a "real" credit card or debit card may be issued and sent for the account to target transaction partner 325 in step 1582.

All of the US patents, US patent application publications, US patent applications, foreign patents, foreign patent application and non patent publications referred to in this specification and/or listed in the application data sheet are incorporated herein by reference in their entirety.

From the forgoing and further it will be appreciated that, although specific embodiments have been described herein for purposes of illustration, various modifications may be made without deviating from the sprit and scope of the present disclosure. For example, the methods, techniques, computer-readable medium, and systems for providing intermediary based transactions discussed herein are applicable to other architectures and other system architectures depicted. Also, the methods, techniques, computer program products, and systems discussed herein are applicable to differing protocols, communication media (optical, wireless, cable, etc.) and devices (such as wireless handset, electronic organizers, personal digital assistants, portable email machines, game machines, pagers, navigating devices such as GPS receivers etc.).

## Claims

1. A computer-implemented text-editor-based transaction system for financial transactions between entities employing connections established between said entities as represented in a social graph of a virtual social network, the system comprising:
one or more mobile devices configured for registering an individual with a transaction provider using a transaction application and connecting a virtual social network account of the individual with the transaction provider, the one or more mobile devices being further configured for reading-out, in response to the registering, a social graph of the individual in the virtual social network, the social graph representing at least one connection between the individual and a business partner, and importing the at least one connection;
one or more text-editors configured for enabling the individual to initiate a financial transaction by inputting text specifying building blocks of the financial transaction, the building blocks at least comprising a transaction partner, the transaction application being configured for invoking via the text editor semantic text recognition functionality interpreting the text being input by the individual to identify and recognize one or more of the building blocks, wherein the business partner is identified as the transaction partner of the financial transaction based on the imported at least one connection;
a confirmation dialogue replicating the outcome of identifying and recognizing for confirmation by the individual, the transaction application being configured for creating, in response to the confirmation, the financial transaction and triggering a virtual communication channel to generate a notification message indicating the financial transfer to the business partner; and
a transaction list provided by the transaction application listing all notification messages as a structured list of short text messages.

2. The system of claim 1 wherein any entry for a transaction in the list of transactions at least provides information on a transaction partner of the transaction, a transaction amount of the transaction, a current status of the transaction, and an explanatory text of the transaction.

3. The system of any of claims 1 and 2, wherein the financial transaction is either a money sending transaction transferring money from the individual to the business partner, or a money request transaction requesting money from the business partner for the user, the money request transaction requiring conformation by the transaction target.

4. The system of any of claims 1 to 3, wherein the semantic text recognition functionality performs the identifying and recognizing continuously in parallel to text being input.

5. The system of any of claims 1 to 4, wherein the transaction application is further configured to invoke, in response to the identification of a building block, one or more support dialogs enabling the individual to input the building block based on selecting candidates from a list of candidates created based on the identified building block and the recognized text.

6. The system of any of claims 1 to 5, wherein the recognizing of a building block is performed based on recognizing a triggering operator.

7. The system of any of claims 1 to 6 wherein the building blocks to be recognized in addition to the transaction partner further at least comprise a transaction amount and a reason for payment, wherein further the financial transaction is directly settled and cleared by the transaction provider in a closed-loop fashion.

8. The system of claim any of claims 1 to 7, wherein the transaction application is provided as an Application Programming Interface, API and / or an extension to the operating system running on the one or more mobile devices and wherein further the one ore more text-editors are provided by one or more messaging and / or chat applications running on the one or more mobile devices, wherein the semantic text recognition functionality is invoked in response to one or more triggering operators being input into the text editor of the one or more messaging and / or chat applications.

9. A computer-implemented method for providing a text-editor-based transaction system for financial transactions between entities employing connections established between said entities as represented in a social graph of a virtual social network, the method comprising the steps of:
registering an individual with a transaction provider using a transaction application;
connecting, in response to the registering, at least one virtual social network account of the individual with the transaction provider;
reading-out, in response to the registering, a social graph of the individual in the virtual social network, the social graph representing at least one connection between the individual and a business partner, and importing the at least one connection;
providing one or more text-editors for enabling the individual to initiate a financial transaction by inputting text specifying building blocks of the financial transaction, the building blocks at least comprising a transaction partner;
invoking via the text editor semantic text recognition functionality interpreting the text being input by the individual to identify and recognize one or more of the building blocks, wherein the business partner is identified as the transaction partner of the financial transaction based on the imported at least one connection;
replicating the outcome of the identifying and recognizing into a confirmation dialogue for confirmation by the individual;
creating, in response to the confirmation, the financial transaction and triggering a virtual communication channel to generate a notification message indicating the financial transfer to the business partner; and
listing all notification messages in a transaction list as a structured list of short text messages.

10. The method of claim 9, wherein the method is implemented as an Application Programming Interface, API and / or an extension to the operating system running on the one or more mobile devices and wherein further the one ore more text-editors are provided by one or more messaging and / or chat applications running on the one or more mobile devices, wherein the semantic text recognition functionality is invoked by the API and / or the extension to the operating system in response to one or more triggering operators being input into the text editor of the one or more messaging and / or chat applications

11. The method of any of claims 9 and 10, wherein the virtual social network is an extended social network further comprising additional local contacts, addresses, telephone numbers, and locations as stored in the one or more mobile devices and any contact, address, telephone number, and location available to the individual via the one or more mobile devices and / or the network connections of the one or more mobile devices.

12. The method of any of claims 9 to 11, wherein the registering comprises creating with the transaction provider an e-wallet for the individual and wherein further the financial transfer settled and balanced out by the transaction provider using the e-wallet in a closed loop system.

13. The method of any of claims 9 to 12, wherein the individual is supported in specifying the building blocks by distinct controls, each of the distinct controls triggering invoking of a further dialogue for guided input of the information for a single building block .

14. The method of any of claims 9 to 13, wherein the virtual social network provides at least one virtual communication channel allowing the individual connected with the business partner in the virtual social network to communicate with each other, and wherein further the virtual communication channel being triggered is the at least one virtual communication channel of the virtual social network

15. A computer-readable medium having stored thereon computer-readable instructions that, when run on a computer, are configured for performing the steps of any of the methods of claims 9 to 14.
